# EUROPÄISCHE PATENTSCHRIFT

(11) **EP 3 712 696 B1**
(45) Veröffentlichungstag und Bekanntmachung des Hinweises auf die Patenterteilung: **20.10.2021**
(21) Anmeldenummer: 20000081.8
(22) Anmeldetag: 26.02.2020
(51) Int. Cl.: G03B 7/00, G01S 5/02, G01S 11/06, G01S 19/14, G01W 1/00, G03B 41/00

(54) **VORRICHTUNG UND VERFAHREN ZUM OPTIMIEREN VON EIGENSCHAFTEN EINER FOTOGRAFISCHEN AUFNAHME**
DEVICE AND METHOD FOR OPTIMIZING PHOTOGRAPHIC RECORDING PROPERTIES
DISPOSITIF ET PROCÉDÉ D'OPTIMISATION DES PROPRIÉTÉS D'UNE PRISE DE VUE PHOTOGRAPHIQUE

(30) Priorität: 19.03.2019 DE 102019001910
(43) Veröffentlichungstag der Anmeldung: 23.09.2020
(73) Patentinhaber: Meinhardt, Barbara, 82152 Krailling (DE)
(72) Erfinder: Meinhardt, Ingo, 82152 Krailling (DE)

(56) Entgegenhaltungen:
- WO-A1-2004/038500
- JP-A- 2008 017 223
- KR-A- 20090 061 962

## Beschreibung

Die vorliegende Erfindung betrifft eine Vorrichtung und ein Verfahren zum Optimieren von Eigenschaften einer fotografischen Aufnahme.

Die Qualität einer fotografischen Aufnahme hängt maßgeblich von den vorherrschenden Lichtverhältnissen ab. Bei Aufnahmen außerhalb von geschlossenen Gebäuden werden diese Lichtverhältnisse vom Sonnenlicht bestimmt. Von wesentlicher Bedeutung sind zunächst die aktuellen Wetterbedingungen, z.B. bedeckter Himmel, Nebel oder wolkenloser Himmel. Einfluss hat aber auch der Sonnenstand. So wirkt eine fotografische Aufnahme bei tiefstehender Sonne wesentlich ansprechender als eine identische Aufnahme zur Mittagszeit. Außerdem sind spezielle Lichtbedingungen, wie z.B. Gegenlicht oder Rückenlicht zu beachten. Weiterhin ist der Sonnenstand relativ zur Blickrichtung der Kamera zu beachten, wenn ein Polarisationsfilter verwendet wird.

Aus der WO 2004 / 038 500 A1 ist eine Vorrichtung zum Steuern einer Belichtungseinrichtung eines optischen Gerätes bekannt. Diese Vorrichtung umfasst eine Einrichtung zum Ermitteln einer Ausrichtung der optischen Vorrichtung, d.h. der Richtung, in die die optische Vorrichtung ausgerichtet ist, sowie eine Einrichtung zum Ermitteln einer Einfallsrichtung eines von einer Lichtquelle emittierten Lichtes. Schließlich ist eine Einrichtung zum Ermitteln eines Steuerwertes für die Belichtungseinrichtung auf der Basis der ermittelten Ausrichtung und der ermittelten Einfallsrichtung vorgesehen, sodass sich eine vorbestimmte Belichtung für die optische Vorrichtung ergibt, wie z.B. eine Belichtung, die zu einer qualitativ besseren Aufnahme, insbesondere unter Vermeidung von Gegenlichtaufnahmen, führt.

Aus der US 2016 / 0 205 305 A1 ist ein Verfahren zur Verbesserung der Bildqualität einer fotografischen Aufnahme bekannt, wobei mit einem ersten Sensor und einem zweiten Sensor die Umgebungslichtstärke, die Empfangsstärke eines GPS-Signals und/oder die Empfangsstärke eines WIFI-Signals ermittelt wird. Bei Erreichen eines bestimmten Schwellenwertes dieser Sensoren wird in einem Verfahrensschritt ein Indoor-/Outdoor-Status gesetzt, woraufhin in Abhängigkeit vom Indoor-/Outdoor-Status verschiedene Kameraeinstellungen zur Verbesserung der Bildqualität einstellbar sind.

Die US 2011 / 0 058 802 A1 bezieht sich auf das Einstellen von fotografischen Parametern, die zumindest teilweise auf Signalmessungen basieren, wie zum Beispiel den Sonnenstand. Die Vorrichtung besteht aus einer drahtlosen Kommunikationsvorrichtung, die eine integrierte Digitalkamera enthält. Die Vorrichtung ist in der Lage, basierend auf Signalinformationen, die über drahtlose Kommunikation empfangen werden, die Position der Sonne relativ zu der Position der Vorrichtung zu schätzen. Die Vorrichtung ist weiterhin in der Lage, den geschätzten Sonnenstand zu verwenden, um einen oder mehrere fotografische Parameter, wie z.B. die Farbbalance oder den Weißabgleich zu beeinflussen.

Aus der JP 2008- 017 223 A ist ein Abbildungssystem zum Fotografieren eines Objekts bekannt, wobei dieses Abbildungssystem einen Neigungswinkelsensor, einen GPS-Empfänger und eine Steuerung umfasst. Basierend auf der Ausrichtung des Abbildungssystems und der zeitlichen Änderung des Objekts wird auf dem Monitor des Abbildungssystems ein Führungsbild angezeigt.

Die KR 2009 0061962 A zeigt eine digitale Bildverarbeitungsvorrichtung mit einem GPS-Empfänger, einem elektronischen Kompass und einer automatischen Hintergrundbeleuchtungserkennungsfunktion, um basierend auf Ortsinformationen, Richtungsinformationen und Zeitinformationen den Einfallswinkel der Sonne und einen Hintergrundbeleuchtungsbereich zu berechnen. Dadurch können manuelle Fehler bei der Bestimmung der Hintergrundbeleuchtung reduziert werden.

Aufgabe der vorliegenden Erfindung ist eine Vorrichtung und ein Verfahren anzugeben, mit deren Hilfe die zum Zeitpunkt einer fotografischen Aufnahme herrschenden Lichtbedingungen bewertet werden, um Kontrast, Farbsättigung und Farbtemperatur dieser fotografischen Aufnahme zu optimieren.

Diese Aufgabe wird gelöst durch eine Vorrichtung gemäß Patentanspruch 1 sowie ein Verfahren gemäß Anspruch 6. Weitere Vorteile und Merkmale der Erfindung ergeben sich aus den Unteransprüchen sowie der Beschränkung und den beigefügten Figuren.

Eigenschaften einer fotografischen Aufnahme im Sinne der Erfindung sind Bildparameter wie beispielsweise Kontrast, Farbsättigung und/oder Farbtemperatur.

Als fotografisches Objekt im Sinne der Erfindung werden Fotomotive verstanden, deren Abbildungsqualität vorwiegend vom natürlichen Sonnenlicht bestimmt wird. Dazu gehören sowohl Architekturmotive, wie z.B. einzelne Gebäude, Teile von Gebäuden, Gebäudefassaden, Denkmäler oder technische Bauwerke als auch Landschaftsmotive, wie z.B. markante Bergketten oder andere Landschaftsstrukturen.

Als Kamera im Sinne der Erfindung werden analoge Fotoapparate, digitale Fotoapparate, mit einer Kamera ausgerüstete Mobiltelefone oder sonstige bildaufnehmende Vorrichtungen . verstanden.

Erfindungsgemäß ist eine Vorrichtung zum Optimieren von Eigenschaften einer fotografischen Aufnahme zum Optimieren von Eigenschaften einer fotografischen Aufnahme.

Erfindungsgemäß ist eine Objektpositionsbestimmungsvorrichtung, die anhand von GPS-Daten (Koordinaten des Global Positioning Systems) die Objektposition, d.h. die Position des fotografischen Objekts in seiner Umgebung, definiert.

Weiterhin ist eine Objektwinkelbestimmungsvorrichtung erfindungsgemäß, die anhand eines Vektors, der durch zwei repräsentative Koordinaten des fotografischen Objekts, die von der Objektpositionsbestimmungsvorrichtung ermittelt wurden, definiert ist, den Objektwinkel OW ermittelt. Der Objektwinkel OW gibt die Ausrichtung (Himmelsrichtung) des fotografischen Objekts in seiner Umgebung an.

Erfindungsgemäß ist eine Kamerapositionsbestimmungsvorrichtung, die anhand von GPS-Daten (Koordinaten des Global Positioning Systems) die Kameraposition in ihrer Umgebung definiert.

Erfindungsgemäß ist weiterhin eine Kamerawinkelbestimmungsvorrichtung, die anhand eines Vektors, der durch die Kameraposition, die von der Kamerapositionsbestimmungsvorrichtung ermittelt wurde, und durch die Objektposition, die von der Objektpositionsbestimmungsvorrichtung ermittelt wurde, definiert ist, den Kamerawinkel bestimmt. Der Kamerawinkel stellt die Blickrichtung der Kamera (Himmelsrichtung) zum fotografischen Objekt dar.

Erfindungsgemäß ist eine Azimutbestimmungsvorrichtung, die den Horizontalwinkel (Azimut) der Sonne zur Meridianebene von Norden aus bezogen auf die Objektposition, d.h. auf die Position des fotografischen Objekts, die von der Objektpositionsbestimmungsvorrichtung ermittelt wurde, bestimmt.

Erfindungsgemäß ist außerdem eine Elevationsbestimmungsvorrichtung, die den Höhenwinkel (Elevation) der Sonne zur Horizontalebene bezogen auf die Objektposition, d.h. auf die Position des fotografischen Objekts, die von der Objektpositionsbestimmungsvorrichtung ermittelt wurde, bestimmt.

Weiterhin erfindungsgemäß ist eine Azimutobjektdifferenzwinkelbestimmungsvorrichtung, die anhand des Azimuts (Horizontalwinkel) der Sonne, welches von der Azimutbestimmungsvorrichtung ermittelt wurde, und anhand des Objektwinkels, der von der Objektdifferenzwinkelbestimmungsvorrichtung ermittelt wurde und die Ausrichtung des fotografischen Objekts definiert, einen sich aus beiden Winkeln ergebenden Differenzwinkel berechnet, der als Azimutobjektdifferenzwinkel bezeichnet wird.

Erfindungsgemäß ist auch eine Azimutkameradifferenzwinkelbestimmungsvorrichtung, die anhand des Azimuts (Horizontalwinkel) der Sonne, welches von der Azimutbestimmungsvorrichtung ermittelt wurde, und anhand des Kamerawinkels, der von der Kamerawinkelbestimmungsvorrichtung ermittelt wurde, einen sich aus beiden Winkeln ergebenden Differenzwinkel berechnet, der als Azimutkameradifferenzwinkel bezeichnet wird.

Weiterhin erfindungsgemäß ist eine Wetterbestimmungsvorrichtung, die anhand von Wetterdaten die aktuellen Lichtverhältnisse, wie z.B. bedeckter, bewölkter oder wolkenloser Himmel, bezogen auf die Objektposition, d.h. auf die Position des fotografischen Objekts, die von der Objektpositionsbestimmungsvorrichtung ermittelt wurde, bestimmt.

Erfindungsgemäß ist eine Wetterbewertungsvorrichtung, die anhand der von der Wetterbestimmungsvorrichtung bestimmten aktuellen Lichtverhältnisse eine die aktuelle Wetterlage widerspiegelnde Bewertungszahl berechnet.

Erfindungsgemäß ist eine Elevationsbewertungsvorrichtung, die anhand der Elevation (Höhenwinkel) der Sonne, die von der Elevationsbestimmungsvorrichtung ermittelt wurde, eine Bewertungszahl berechnet.

Weiterhin erfindungsgemäß ist eine Azimutobjektdifferenzwinkelbewertungsvorrichtung, die anhand des Differenzwinkels zwischen dem Azimut (Horizontalwinkel) der Sonne und dem Objektwinkel, der von der Azimutobjektdifferenzwinkelbestimmungsvorrichtung ermittelt wurde und als Azimutobjektdifferenzwinkel bezeichnet wird, eine Bewertungszahl berechnet.

Erfindungsgemäß ist eine Azimutkameradifferenzwinkelbewertungsvorrichtung, die anhand des Differenzwinkels zwischen dem Azimut (Horizontalwinkel) der Sonne und dem Kamerawinkel, der von der Azimutkameradifferenzwinkelbestimmungsvorrichtung ermittelt wurde und als Azimutkameradifferenzwinkel bezeichnet wird, eine Bewertungszahl berechnet.

Schließlich ist eine Gesamtbewertungsvorrichtung erfindungsgemäß, die aus den gewichteten Bewertungszahlen der Wetterbewertungsvorrichtung, der Elevationsbewertungsvorrichtung, der Azimutobjektdifferenzwinkelbewertungsvorrichtung und der Azimutkameradifferenzwinkelbewertungsvorrichtung eine Gesamtbewertungszahl berechnet. Bei Überschreiten eines Schwellwertes der Gesamtbewertungszahl steuert die Gesamtbewertungsvorrichtung eine Auslösevorrichtung, eine Signalisierungsvorrichtung und/oder eine Anzeigevorrichtung an.

Erfindungsgemäß ist außerdem ein Verfahren zum Optimieren von Eigenschaften einer fotografischen Aufnahme mit einem Objektwinkelbestimmungsvorgang (S102) zur Bestimmung des Objektwinkels (OW) des fotografischen Objekts (1, 2), mit einem Kamerawinkelbestimmungsvorgang (S104) zur Bestimmung des Kamerawinkels (KW) von der Kameraposition (KP) zur Objektposition (OP), mit einem Elevationsbestimmungsvorgang (S107) zur Bestimmung der Elevation (E) der Sonne bezogen auf die Objektposition (OP) des fotografischen Objekts (1, 2), mit einem Azimutbestimmungsvorgang (S108) zur Bestimmung des Azimuts (A) der Sonne bezogen auf die Objektposition (OP) des fotografischen Objekts (1, 2), mit einem Azimutobjektdifferenzwinkelbestimmungsvorgang (S109) zur Bestimmung des Azimutobjektdifferenzwinkels (AODW) der sich aus der Differenz des Azimuts (A) der Sonne und des Objektwinkels (OW) ergibt, mit einem Azimutkameradifferenzwinkelbestimmungsvorgang (S110) zur Bestimmung des Azimutkameradifferenzwinkels (AKDW), der sich aus der Differenz des Azimuts (A) der Sonne und des Kamerawinkels (KW) ergibt.

Erfindungsgemäß innerhalb dieses Verfahrens ist weiterhin ein Elevationsbewertungsvorgang (S112) zur Bewertung der Elevation (E) der Sonne und zur Berechnung einer Elevationsbewertungszahl (BE), ein Azimutobjektdifferenzwinkelbewertungsvorgang (S113) zur Bewertung des Azimutobjektdifferenzwinkels (AODW) und zur Berechnung einer Azimutobjektdifferenzwinkelbewertungszahl (BAODW), ein Azimutkameradifferenzwinkelbewertungsvorgang (S114) zur Bewertung des Azimutkameradifferenzwinkels und zur Berechnung einer Azimutkameradifferenzwinkelbewertungszahl (BAKDW), und ein Gesamtbewertungsvorgang (S115) zur Berechnung eine Gesamtbewertungszahl (BG) basierend auf der Elevationsbewertungszahl (BE), der Azimutobjektdifferenzwinkelbewertungszahl (BAODW) und der Azimutkameradifferenzwinkelbewertungszahl (BAKDW).

Zum erfindungsgemäßen Verfahren gehört außerdem das Ausführen einer Aktion, wenn in einem Vergleichsvorgang (S116) festgestellt wird, dass die Gesamtbewertungszahl (BG) einen Bewertungsschwellwert (BSW) überschreitet.
- Fig. 1a: zeigt ein fotografisches Objekt 1 (Gebäude) mit der Objektposition OP
- Fig. 1b: zeigt ein fotografisches Objekt 2 (Landschaft mit Höhenlinien) mit der Objektposition OP
- Fig. 2a, 2b: zeigt anhand des Objektwinkels OW die Ausrichtung eines fotografischen Objekts 1 (Gebäude).
- Fig. 2c: zeigt anhand des Objektwinkels OW die Ausrichtung eines fotografischen Objekts 2 (Landschaft mit Höhenlinien).
- Fig. 3: zeigt eine Kamera 10 mit ihrer Kameraposition KP.
- Fig. 4a, 4b: zeigt die Ermittlung des Kamerawinkels KW zum fotografischen Objekt 1 (Gebäude).
- Fig. 5a, 5b: zeigt die Ermittlung von Azimut A (Horizontalwinkel) und Elevation E (Höhenwinkel) der Sonne.
- Fig. 6a, 6b: zeigt den Azimutobjektdifferenzwinkel AODW, d.h. den Auftreffwinkel der Sonnenstrahlen auf die Oberfläche des fotografischen Objekts bei verschiedenen Sonnenständen.
- Fig. 7a, 7b, 7c: zeigt den Azimutkameradifferenzwinkel AKDW, d.h. den Sonnenstand relativ zum Kamerawinkel KW bei verschiedenen Sonnenständen.
- Fig. 8, 9: zeigt ein Blockschaltbild der erfindungsgemäßen Vorrichtung zum Optimieren von Eigenschaften einer fotografischen Aufnahme.
- Fig. 10a,: 10b zeigt einen Ablaufplan des erfindungsgemäßen Verfahrens.

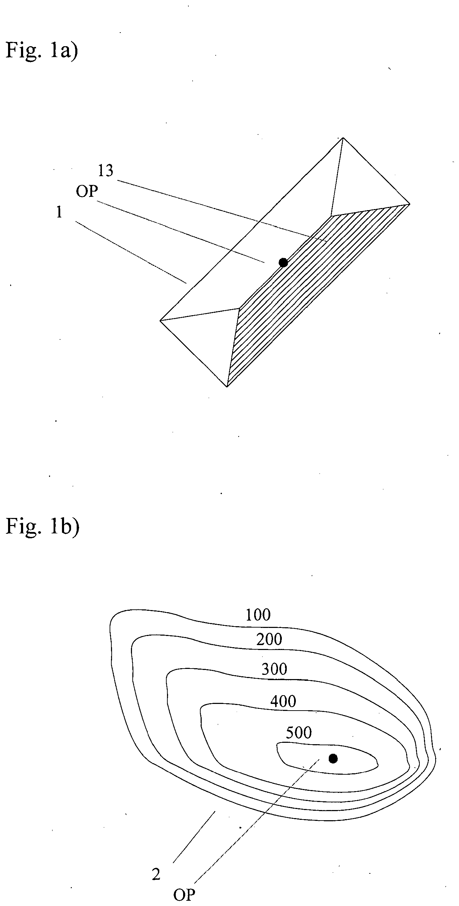

Gemäß den Fig. la und Fig. 1b ermittelt die Objektpositionsbestimmungsvorrichtung 30 die Objektposition OP, d.h. die geografische Position des fotografischen Objekts 1 oder 2, in Form von GPS-Daten (Global Positioning System). Diese GPS-Daten umfassen eine geografische Längenangabe und eine geografische Breitenangabe. Sie beziehen sich z.B. bei Gebäuden (vgl. Fig. 1a, bei Bergketten und ähnlichen Landschaftsstrukturen (vgl. Fig. 1b) auf den Flächenschwerpunkt der horizontalen Grundfläche dieser Objekte. Die Objektpositionsbestimmungsvorrichtung 30 kann diese GPS-Daten vor Ort mit Hilfe eines GPS-Empfängers ermitteln. Diese GPS-Daten können von der Objektpositionsbestimmungsvorrichtung 30 auch mit Hilfe einer kabellosen oder kabelgebundenen Datenverbindung aus einer beliebigen Datenbank oder von einem Online-Kartendienst gelesen werden.

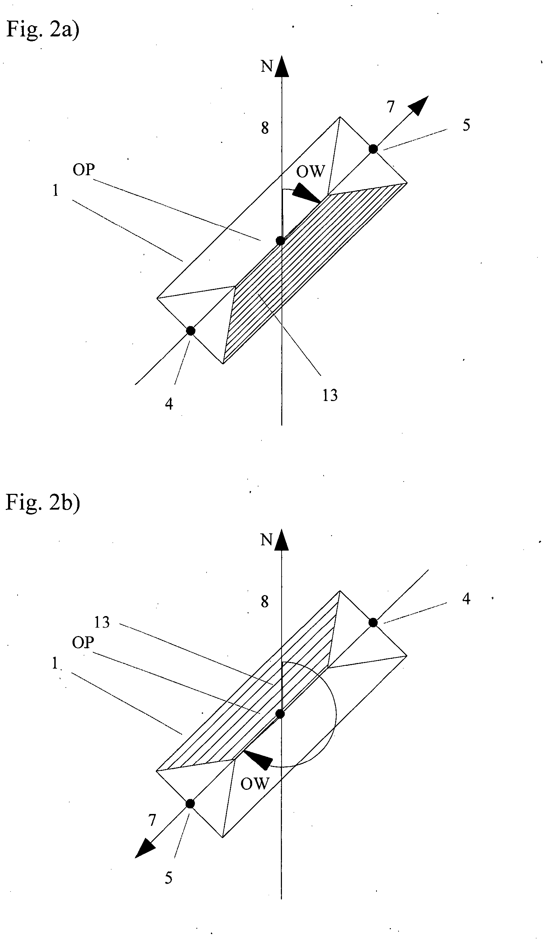

Fig. 2a zeigt, wie die Objektwinkelbestimmungsvorrichtung 31 anhand von GPS-Daten (Global Positioning System) zweier repräsentativer Koordinaten 4 und 5 des fotografischen Objekts 1, die von der Objektpositionsbestimmungsvorrichtung 30 ermittelt wurden, den Objektwinkel OW, d.h. die Ausrichtung (Himmelsrichtung) des fotografischen Objekts 1 in seiner Umgebung, ermittelt. Die Verbindungslinie zwischen den Koordinaten 4 und 5, die die Längsrichtung des fotografischen Objekts 1 repräsentieren, definiert hierbei einen Vektor 7. Die Himmelsrichtung Norden wird durch den Vektor 8 symbolisiert. Der sich zwischen den beiden Vektoren 7 und 8 aufspannende Winkel wird als Objektwinkel OW bezeichnet und zeigt die Ausrichtung (Himmelsrichtung) des fotografischen Objekts 1 in seiner Umgebung mit einem Wertebereich von 0° bis 360°, bezogen auf die Himmelsrichtung Nord, an. Beide repräsentativen Koordinaten 4 und 5 des fotografischen Objekts 1 liegen in Form von GPS-Daten (Global Positioning Systems) vor und werden von der Objektwinkelbestimmungsvorrichtung 31 in identischer Art und Weise wie die Objektposition OP, d.h. die geografische Position des fotografischen Objekts 1, ermittelt.

Ein weiterer Aspekt der maßgeblich für Ermittlung des Objektwinkels OW, d.h. der Ausrichtung (Himmelsrichtung) des fotografischen Objekts 1 in seiner Umgebung, mit Hilfe der Objektwinkelbestimmungsvorrichtung 31 ist, wird in der Fig. 2b im Unterschied zur Fig. 2a deutlich. Mit der Wahl der Anordnung der repräsentativen Koordinaten 4 und 5 des fotografischen Objekts 1 wird die Richtung des Vektors 7 festgelegt. Ausgangspunkt hierfür ist die Festlegung einer Vorzugsseite 13 des fotografischen Objekts 1, d.h. die motivbildende und fotografisch interessante Ansicht des fotografischen Objekts 1. Aus Fig. 2a und 2b wird deutlich, dass sich die Vorzugsseite 13 des fotografischen Objekts 1 in Richtung des Vektors 7 stets auf der rechten Seite befindet. Die Festlegung, welche Seite des fotografischen Objekts 1 als Vorzugsseite 13 anzusehen ist, entnimmt die Objektwinkelbestimmungsvorrichtung 31 einer internen oder externen Datenbank.

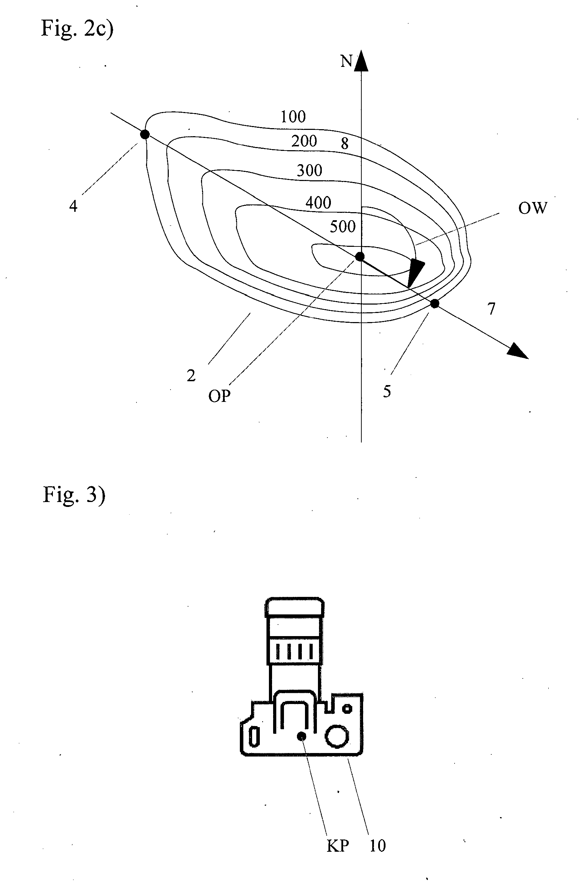

Aus Fig. 2c ist ersichtlich, wie die Objektwinkelbestimmungsvorrichtung 31 analog zu den unter Fig. 2a beschriebenen Schritten anhand zweier repräsentativer Koordinaten 4 und 5 des fotografischen Objekts 2 den Objektwinkel OW, d.h. die Ausrichtung (Himmelsrichtung) des fotografischen Objekts 2 in seiner Umgebung, ermittelt. Erkennbar ist in den Figuren 2a bis 2c außerdem, dass der sich zwischen den beiden Vektoren 7 und 8 ergebende Objektwinkel OW, der die Ausrichtung (Himmelsrichtung) des fotografischen Objekts 1, 2 in seiner Umgebung angibt, ein Nullwinkel, ein spitzer Winkel, ein rechter Winkel, ein stumpfer Winkel, ein gestreckter Winkel oder ein überstumpfer Winkel sein kann.

Entsprechend Fig. 3 ermittelt die Kamerapositionsbestimmungsvorrichtung 32 die Kameraposition KP der Kamera 10 in Form von GPS-Daten (Global Positioning System). Diese GPS-Daten umfassen eine geografische Längenangabe und eine geografische Breitenangabe. Sie beziehen sich auf den Mittelpunkt des lichtempfindlichen Elements der Kamera 10. Die Kamerapositionsbestimmungsvorrichtung 32 kann diese GPS-Daten vor Ort mit Hilfe eines GPS-Empfängers ermitteln. Alternativ können diese GPS-Daten von der Kamerapositionsbestimmungsvorrichtung 32 auch mit Hilfe einer kabellosen oder kabelgebundenen Datenverbindung aus einer beliebigen Datenbank oder von einem Online-Kartendienst gelesen werden.

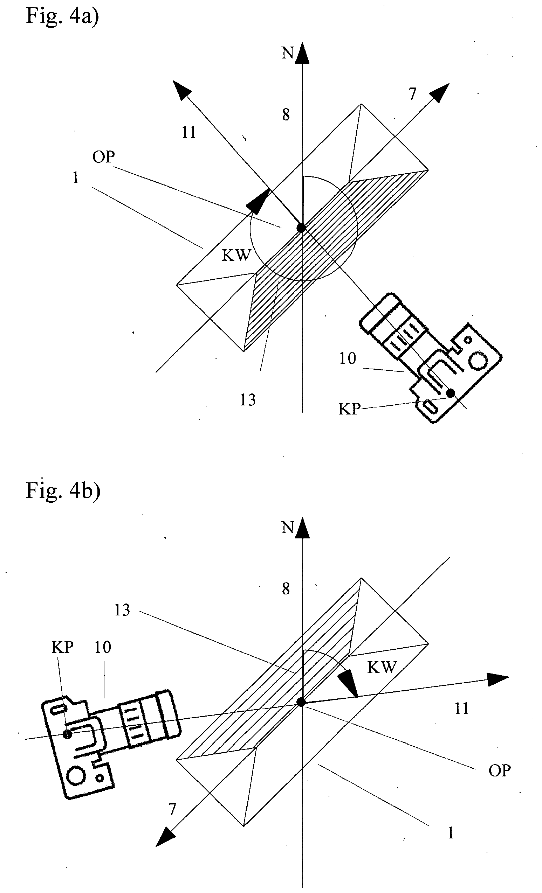

Die Fig. 4a und 4b verdeutlichen die Berechnung des Kamerawinkels KW, d.h. der Blickrichtung der Kamera 10 (Himmelsrichtung), durch die Kamerawinkelbestimmungsvorrichtung 33. Ausgangspunkt sind die von der Objektpositionsbestimmungsvorrichtung 30 ermittelte Objektposition OP, d.h. die geografische Position des fotografischen Objekts 1 oder 2, sowie die von der Kamerapositionsbestimmungsvorrichtung 32 ermittelte Kameraposition KP der Kamera 10, wobei die Objektposition OP und die Kameraposition KP in Form von GPS-Daten vorliegen. Die Verbindungslinie zwischen den Koordinaten OP und KP, die den Winkel der Blickrichtung der Kamera 10 repräsentiert, bildet hierbei einen Vektor 11. Die Himmelsrichtung Norden wird wiederum durch den Vektor 8 symbolisiert. Der sich zwischen den beiden Vektoren 8 und 11 aufspannende Differenzwinkel gibt den Kamerawinkel KW der Kamera 10 (Himmelsrichtung) mit einem Wertebereich des Differenzwinkels von 0° bis 360° bezogen auf die Himmelsrichtung Nord an. Der Kamerawinkel KW stellt somit die Blickrichtung der Kamera 10 bezogen auf die Himmelsrichtung Nord dar. Fig. 4a zeigt hierbei einen Kamerawinkel KW nach Nordwest mit einem Wert zwischen 270° und 360°, während Fig. 4b einen Kamerawinkel KW nach Nordost mit einem Wert des Differenzwinkels zwischen 0° und 90° andeutet. Alternativ zur Berechnung des Kamerawinkels KW der Kamera 10 basierend auf der Kameraposition KP der Kamera 10 und der Objektposition OP, d.h. der geografischen Position des fotografischen Objekts 1 oder 2, kann auch ein elektronischer Kompass verwendet werden. Dieser elektronische Kompass kann Teil der Kamerawinkelbestimmungsvorrichtung 33 oder mittels einer kabellosen oder kabelgebundenen Datenverbindung mit der Kamerawinkelbestimmungsvorrichtung 33 verbunden sein.

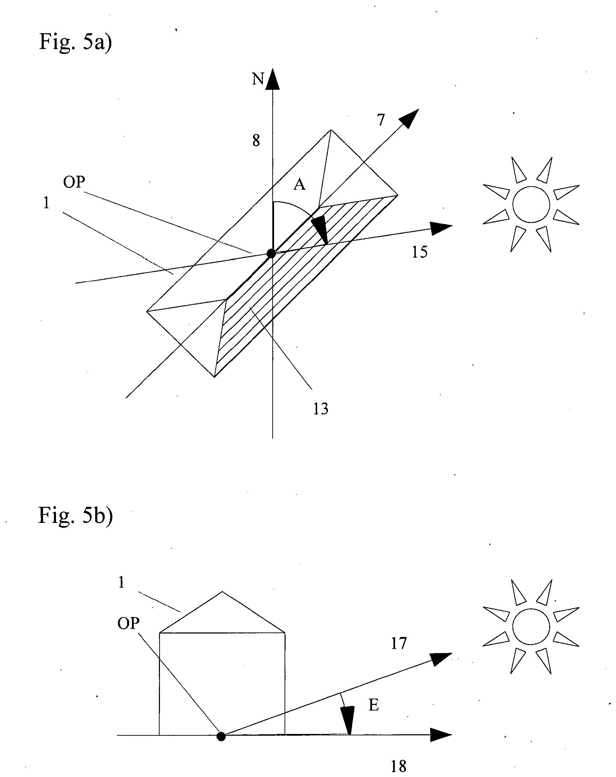

Aus Fig. 5a zeigt die Funktion der Azimutbestimmungsvorrichtung 35, die das Azimut A (Horizontalwinkel) der Sonne zur Meridianebene von Norden aus bezogen auf die Objektposition OP, d.h. auf die geografische Position des fotografischen Objekts, bestimmt. Der sich zwischen den beiden Vektoren 8 und 15 aufspannende Differenzwinkel gibt das Azimut A (Horizontalwinkel) der Sonne mit einem Wertebereich des Differenzwinkels von 0° bis 360° (90°=Osten, 180°=Süden, 270°=Westen, 360°=Norden) an. Das Azimut A (Horizontalwinkel) der Sonne wird von der Azimutbestimmungsvorrichtung 35 für ein fest vorgegebenes Datum (vorzugsweise aktuelles Datum), für eine fest vorgegebene Uhrzeit (vorzugsweise aktuelle Uhrzeit) bezogen auf die Objektposition OP, d.h. auf die geografische Position des fotografischen Objekts, berechnet. Diese Berechnung erfolgt entsprechend den gängigen Berechnungsmethoden mit Hilfe der Bestimmung der ekliptikalen Längenkoordinaten der Sonne, der Äquatorialkoordinaten der Sonne unter Berücksichtigung der Schiefe der Ekliptik und mit Hilfe der Bestimmung der Horizontalkoordinaten der Sonne unter Berücksichtigung des Greenwich-Stundenwinkels des Frühlingspunktes.

Fig. 5b verdeutlicht die Funktion der Elevationsbestimmungsvorrichtung 36, die die Elevation E (Höhenwinkel) der Sonne zur Horizontalebene bezogen auf die Objektposition OP, d.h. auf die geografische Position des fotografischen Objekts, bestimmt. Der sich zwischen den beiden Vektoren 17 und 18 aufspannende Differenzwinkel gibt die Elevation E (Höhenwinkel) der Sonne mit einem Wertebereich des Differenzwinkels von -90° bis 90° (<0°=unterhalb des Horizonts, 0°=am Horizont, 90°=im Zenit) an. Der Vektor 18 stellt in diesem Zusammenhang die Horizontalebene dar. Die Elevation E (Höhenwinkel) der Sonne wird von der Elevationsbestimmungsvorrichtung 36 für ein fest vorgegebenes Datum (vorzugsweise aktuelles Datum), für eine fest vorgegebene Uhrzeit (vorzugsweise aktuelle Uhrzeit) bezogen auf die Objektposition OP, d.h. auf die geografische Position des fotografischen Objekts, berechnet. Diese Berechnung ebenfalls erfolgt entsprechend den gängigen Berechnungsmethoden mit Hilfe der Bestimmung der ekliptikalen Längenkoordinaten der Sonne, der Äquatorialkoordinaten der Sonne unter Berücksichtigung der Schiefe der Ekliptik und mit Hilfe der Bestimmung der Horizontalkoordinaten der Sonne unter Berücksichtigung des Greenwich-Stundenwinkels des Frühlingspunktes.

Das von der Azimutbestimmungsvorrichtung 35 zur Bestimmung des Azimuts A (Horizontalwinkel) der Sonne bzw. das von der Elevationsbestimmungsvorrichtung 36 zur Bestimmung der Elevation E (Höhenwinkel) der Sonne fest vorgegebene Datum kann das aktuelle Datum oder ein beliebiges Datum sein. Die von der Azimutbestimmungsvorrichtung 35 zur Bestimmung des Azimuts A (Horizontalwinkel) der Sonne bzw. die von der Elevationsbestimmungsvorrichtung 36 zur Bestimmung der Elevation E (Höhenwinkel) der Sonne fest vorgegebene Uhrzeit kann die aktuelle Uhrzeit oder eine beliebige Uhrzeit sein.

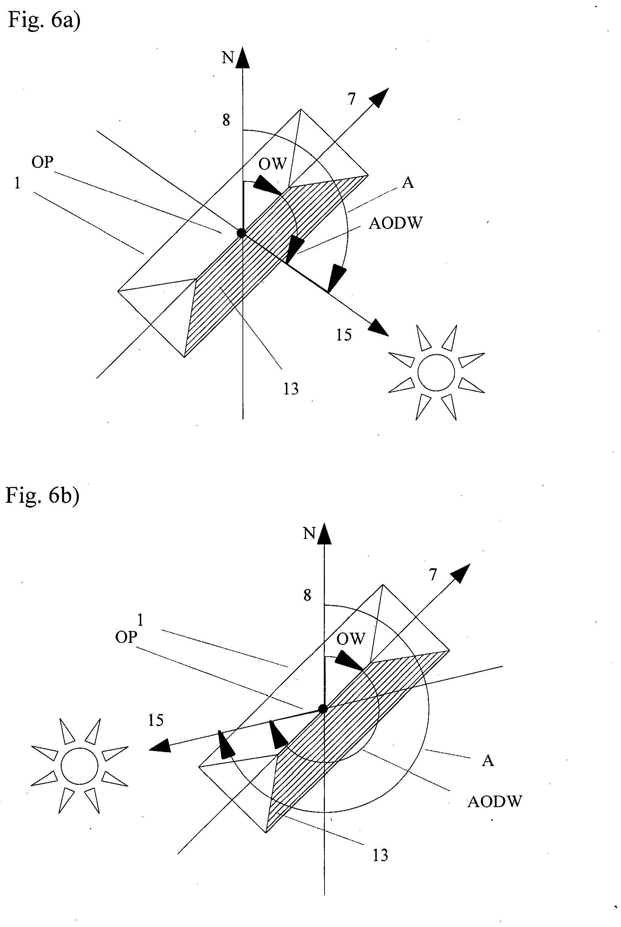

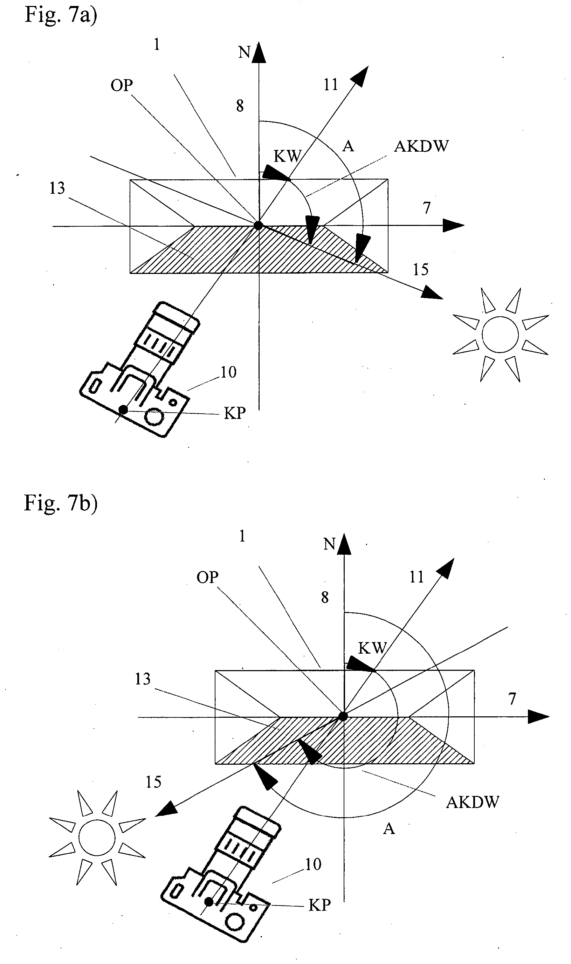

Gemäß der Darstellung in der Fig. 6a berechnet die Azimutobjektdifferenzwinkelbestimmungsvorrichtung 37 anhand des Azimuts A (Horizontalwinkel) der Sonne und anhand des Objektwinkels OW, d.h. der Ausrichtung des fotografischen Objekts 1, einen Differenzwinkel zwischen dem Azimut A (Horizontalwinkel) der Sonne und dem Objektwinkel OW. Dieser Differenzwinkel wird als Azimutobjektdifferenzwinkel AODW bezeichnet. Der sich zwischen Azimut A (Horizontalwinkel) der Sonne und dem Objektwinkel OW ergebende Azimutobjektdifferenzwinkel AODW gibt den Auftreffwinkel der Sonnenstrahlen auf die Oberfläche des fotografischen Objekts mit einem Wertebereich des Differenzwinkels von 0° bis 360° bezogen auf die Himmelsrichtung Nord an. Bei einem Wertebereich zwischen 0° und 180° des Azimutobjektdifferenzwinkels AODW treffen die Sonnenstrahlen, wie in der Fig. 6a für einen typischen Sonnenstand am Vormittag gezeigt, auf die Vorzugsseite 13 des fotografischen Objekts. Bei einem Wertebereich zwischen 180° und 360° des Azimutobjektdifferenzwinkels AODW treffen die Sonnenstrahlen, wie in der Fig. 7b für einen typischen Sonnenstand am Nachmittag gezeigt, auf die Rückseite des fotografischen Objekts. Die Vorzugsseite 13 des fotografischen Objekts liegt somit im Schatten.

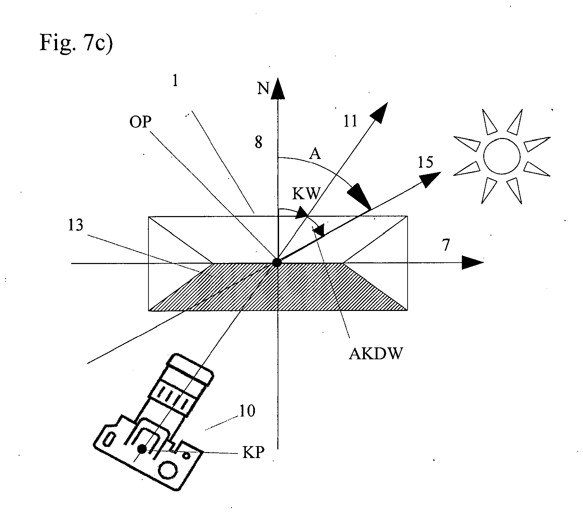

Die Fig. 7a und 7b verdeutlicht die Funktion der Azimutkameradifferenzwinkelbestimmungsvorrichtung 38, die anhand des Kamerawinkels KW und anhand des Azimuts A (Horizontalwinkel) der Sonne einen Differenzwinkel zwischen dem Azimut A (Horizontalwinkel) der Sonne und dem Kamerawinkel KW berechnet. Dieser Differenzwinkel wird als Azimutkameradifferenzwinkel AKDW bezeichnet. Der sich zwischen dem Azimut A (Horizontalwinkel) der Sonne und dem Kamerawinkel KW ergebende Azimutkameradifferenzwinkel AKDW gibt den Sonnenstand relativ zum Kamerawinkel KW mit einem Wertebereich des Differenzwinkels von 0° bis 360° an. Bei einem Wertebereich von etwa 90° des Azimutkameradifferenzwinkels AKDW herrscht, wie in der Fig. 7a für einen typischen Sonnenstand am Vormittag gezeigt, fotografisch günstiges Seitenlicht. Bei einem Wertebereich zwischen etwa 170° und 190° des Azimutkameradifferenzwinkels AKDW herrscht, wie in der Fig. 7b für einen typischen Sonnenstand am Nachmittag gezeigt, fotografisch unvorteilhaftes Rückenlicht. Bei einem Wertebereich zwischen etwa 350° und 10° des Azimutkameradifferenzwinkels AKDW herrscht, wie in der Fig. 7c für einen typischen Sonnenstand am frühen Morgen gezeigt, fotografisch äußerst unvorteilhaftes Gegenlicht.

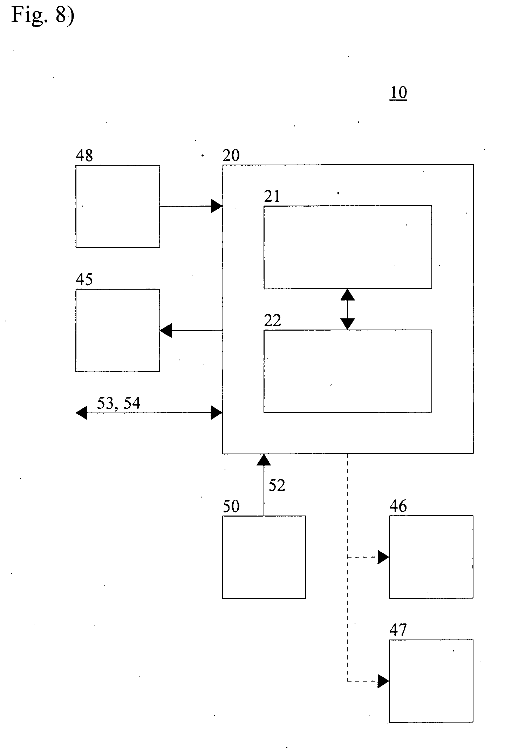

Fig. 8 zeigt die Implementierung der erfindungsgemäßen Vorrichtung 20 zum Optimieren von Eigenschaften einer fotografischen Aufnahme in ein tragbares Gerät, vorzugsweise in eine Kamera 10. Die Vorrichtung 20 zum Optimieren von Eigenschaften einer fotografischen Aufnahme umfasst eine Recheneinheit 21, insbesondere einen Mikroprozessor oder Computer, und eine Speichereinheit 22, insbesondere eine Festplatte, eine Speicherkarte, FLASH-Speicher, EEPROM, oder RAM. Die Vorrichtung 20 zum Optimieren von Eigenschaften einer fotografischen Aufnahme ist mit einer Eingabevorrichtung 48, insbesondere Bedienelemente des tragbaren Gerätes, verbunden. Weiterhin ist die Vorrichtung 20 zum Optimieren von Eigenschaften einer fotografischen Aufnahme mit einer Auslösevorrichtung 45 verbunden, um das tragbare Gerät (Kamera 10) für eine fotografische Aufnahme auszulösen. Je nach konkretem Anwendungsfall kann an die Vorrichtung 20 zum Optimieren von Eigenschaften einer fotografischen Aufnahme eine Anzeigevorrichtung 47 und/oder eine Signalisierungsvorrichtung 46 angeschlossen sein. Die für die Funktion der erfindungsgemäßen Vorrichtung 20 zum Optimieren von Eigenschaften einer fotografischen Aufnahme bzw. zur Durchführung des erfindungsgemäßen Verfahrens benötigten GPS-Daten (Global Positioning System) empfängt die Vorrichtung 20 zum Optimieren von Eigenschaften einer fotografischen Aufnahme über eine kabellose oder kabelgebundene Datenverbindung 52 von einem GPS-Empfänger 50. Außerdem kann die Vorrichtung 20 zum Optimieren von Eigenschaften einer fotografischen Aufnahme Datenbankabfragen über eine kabellose oder kabelgebundene Datenverbindung 53, 54 mit externen Datenbanken durchführen.

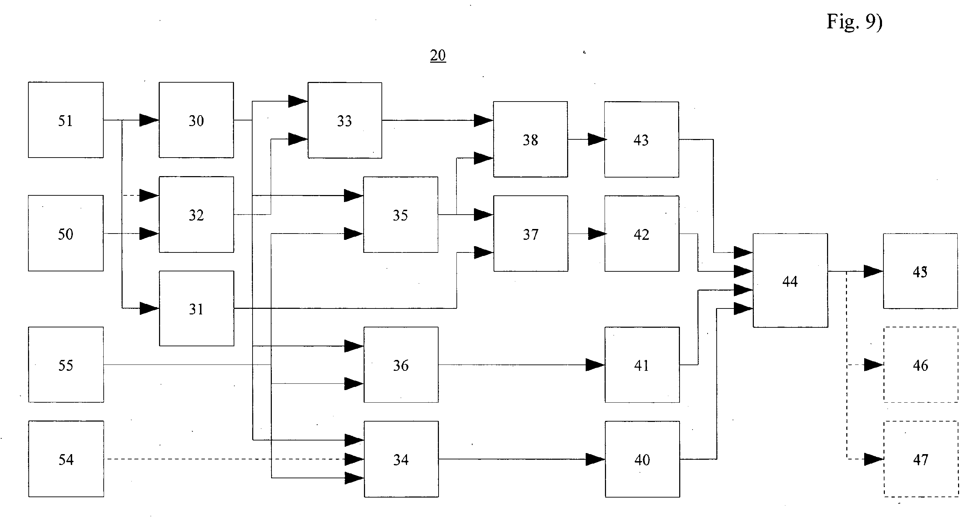

Fig. 9 zeigt das Zusammenspiel der einzelnen Baugruppen der erfindungsgemäßen Vorrichtung 20 zum Optimieren von Eigenschaften einer fotografischen Aufnahme zum Optimieren von Eigenschaften einer fotografischen Aufnahme, die vorzugsweise in die Recheneinheit 21 einer Kamera 10 implementiert ist und mit der Speichereinheit 22 in ständiger Datenverbindung steht. Zunächst empfängt die Kamerapositionsbestimmungsvorrichtung 32 die zur Bestimmung der Kameraposition KP notwendigen GPS-Daten von einem GPS-Empfänger 50. Die GPS-Daten des fotografischen Objekts werden der Objektpositionsbestimmungsvorrichtung 30 und der Objektwinkelbestimmungsvorrichtung 31 mit Hilfe einer Datenbankabfrage aus einer GPS-Datenbank 51 zugeleitet. Das der Datenbankabfrage zugrundeliegende fotografische Objekt wird vorzugsweise automatisch durch die Kamera mittels bekannter Verfahren der digitalen Bildverarbeitung identifiziert, indem eine initiale fotografische Aufnahme des Objekts mit einer vorhandenen Bilddatenbank verglichen wird. Zur Identifizierung des fotografischen Objekts kann die Kamera 10 aber auch auf externe Geolocation Service Provider mittels einer kabellosen oder kabelgebundenen Dateriverbindung zugreifen. Das innerhalb der Datenbankabfrage angegebene fotografische Objekt kann alternativ auch fest vorgegeben sein. Bei der Datenverbindung zum GPS-Empfänger 50 oder zur GPS-Datenbank 51 kann es sich um eine kabellose oder kabelgebundene Datenverbindung handeln. Die von der. Kamerapositionsbestimmungsvorrichtung 32 bestimmte Kameraposition KP und die von der Objektpositionsbestimmungsvorrichtung 30 bestimmte Objektposition OP werden der Kamerawinkelbestimmungsvorrichtung 33 zur Bestimmung des Kamerawinkels KW zugeleitet.

Die Objektposition OP, d.h. die Position des fotografischen Objekts, dient weiterhin der Bestimmung des Azimuts A (Horizontalwinkel) der Sonne durch die Azimutbestimmungsvorrichtung 35, bezogen auf die Objektposition OP zum Zeitpunkt T. Die Objektposition OP wird weiterhin der Elevationsbestimmungsvorrichtung 36 zur Bestimmung der Elevation E (Höhenwinkel) der Sonne, bezogen auf die Objektposition OP zum Zeitpunkt T, zugeleitet. Sowohl die Azimutbestimmungsvorrichtung 35 als auch die Elevationsbestimmungsvorrichtung 36 erhalten Informationen zum aktuellen Datum und zur aktuellen Uhrzeit von einer internen oder externen Uhr 55, falls es sich beim Zeitpunkt T um den aktuellen Zeitpunkt handelt.

Zur Berechnung des Azimutkameradifferenzwinkels AKDW zwischen dem Azimut A (Horizontalwinkel) der Sonne und dem Kamerawinkel KW erfolgt die Zuleitung des von der Azimutbestimmungsvorrichtung 35 berechneten Azimut A (Horizontalwinkel) der Sonne sowie die Zuleitung des von der Kamerawinkelbestimmungsvorrichtung 33 bestimmten Kamerawinkels KW an die Azimutkameradifferenzwinkelbestimmungsvorrichtung 38. Dieser als Azimutkameradifferenzwinkel AKDW bezeichnete Differenzwinkel stellt den horizontalen Einfallswinkel der Sonne relativ zum Kamerawinkel KW zum Zeitpunkt T dar.

Weiterhin wird das von der Azimutbestimmungsvorrichtung 35 berechnete Azimut A (Horizontalwinkel) der Sonne zusammen mit dem von der Objektwinkelbestimmungsvorrichtung 31 bestimmten Objektwinkel OW, d.h. der Ausrichtung (Himmelsrichtung) des fotografischen Objekts in seiner Umgebung, in der Azimutobjektdifferenzwinkelbestimmungsvorrichtung 37 zur Berechnung eines Azimutobjektdifferenzwinkels AODW zwischen dem Azimut A (Horizontalwinkel) der Sonne und dem Objektwinkel OW herangezogen. Dieser als Azimutobjektdifferenzwinkel AODW bezeichnete Differenzwinkel stellt den horizontalen Einfallswinkel der Sonne auf die Vorzugsseite 13 des fotografischen Objekts zum Zeitpunkt T dar.

Zur Lösung der gestellten Aufgabe, die Eigenschaften einer fotografischen Aufnahme zu optimieren, werden sämtliche Rechenergebnisse der vorangehend beschriebenen Vorrichtungen schließlich separaten Bewertungsvorrichtungen zugeleitet.

So bewertet die Azimutobjektdifferenzwinkelbewertungsvorrichtung 42 den von der Azimutobjektdifferenzwinkelbestimmungsvorrichtung 37 für den Zeitpunkt T berechneten Azimutobjektdifferenzwinkel AODW zwischen dem Azimut A (Horizontalwinkel) der Sonne und dem Objektwinkel OW aufgrund der Tatsache, dass unterschiedliche horizontale Einfallswinkel der Sonne auf die Vorzugsseite 13 des fotografischen Objekts unterschiedliche visuelle Eindrücke an der Vorzugsseite 13 des fotografischen Objekts hervorrufen. Beispielsweise erzeugt ein spitzer oder stumpfer, horizontaler Einfallswinkel der Sonne starke Kontraste an Oberflächenstrukturen der Vorzugsseite 13 des fotografischen Objekts, welche durch einen hohen Kontrastumfang besonders vorteilhaft für die Aussagekraft der fotografischen Aufnahme des Objekts sind und mit einer hohen Bewertungszahl positiv bewertet werden. Hingegen erzeugt ein senkrechter, horizontaler Einfallswinkel der Sonne keine Kontraste an Oberflächenstrukturen der Vorzugsseite 13 des fotografischen Objekts, wodurch die fotografische Aufnahme des Objekts mit einem niedrigeren Kontrastumfang langweilig wirkt und mit einer niedrigen Bewertungszahl schlechter bewertet wird. Bei einem Wertebereich zwischen 180° und 360° des Azimutobjektdifferenzwinkels AODW, d.h. des horizontalen Einfallswinkels der Sonne, treffen die Sonnenstrahlen, wie in der Fig. 7b für einen typischen Sonnenstand am Nachmittag gezeigt, auf die Rückseite des fotografischen Objekts. Dem äußerst negativen Umstand, dass die Vorzugsseite 13 des fotografischen Objekts somit im Schatten liegt, wird durch eine Bewertungszahl von 0 Rechnung getragen.

Weiterhin bewertet die Azimutkameradifferenzwinkelbewertungsvorrichtung 43 den von der Azimutkameradifferenzwinkelbestimmungsvorrichtung 38 für den Zeitpunkt T anhand des Azimuts A (Horizontalwinkel) der Sonne und anhand des Kamerawinkels-KW berechneten Azimutkameradifferenzwinkels AKDW zwischen dem Azimut A (Horizontalwinkel) der Sonne und dem Kamerawinkel KW aufgrund der Tatsache, dass der horizontale Einfallswinkel der Sonnen relativ zur Kamera 10 einen wesentlichen Einfluss auf die Qualität einer fotografischen Aufnahme hat. Bei einem Wertebereich zwischen etwa 350° und 10° des Azimutkameradifferenzwinkels AKDW herrscht, wie in der Fig. 7c für einen typischen Sonnenstand am frühen Morgen gezeigt, eine fotografisch ungünstige Gegenlichtsituation, die mit einer Bewertungszahl von 0 als sehr negativ bewertet wird. Bei einem Wertebereich zwischen etwa 80° und 100° des Azimutkameradifferenzwinkels AKDW herrscht fotografisch sehr vorteilhaftes Seitenlicht, da hier bei Verwendung eines Polarisationsfilters eine hohe Farbsättigung der fotografischen Aufnahme erzielt werden kann. Seitenlicht, wie in der Fig. 7a für einen typischen Sonnenstand am Vormittag gezeigt wird daher mit einer hohen Bewertungszahl als besonders positiv bewertet. Bei einem Wertebereich zwischen etwa 170° und 190° des Azimutkameradifferenzwinkels AKDW herrscht, wie in der Fig. 7b für einen typischen Sonnenstand am Nachmittag gezeigt, fotografisch unvorteilhaftes Rückenlicht. Bei Verwendung eines Polarisationsfilter kann hier keine erhöhte Farbsättigung der fotografischen Aufnahme erzielt werden, die Farben wirken matt und ungesättigt. Rückenlicht wird mit einer niedrigen Bewertungszahl daher als neutral bis unvorteilhaft bewertet.

Die Elevationsbewertungsvorrichtung 41 bewertet die von der Elevationsbestimmungsvorrichtung 36 erechnete Elevation E (Höhenwinkel) der Sonne, bezogen auf die Objektposition OP, d.h. auf die Position des fotografischen Objekts zum Zeitpunkt T. Die Bewertung erfolgt aufgrund der Tatsache, dass das Sonnenlicht bei unterschiedlichen Elevationen E (Höhenwinkeln) der Sonne unterschiedliche Farbtemperaturen aufweist. Ursache hierfür ist die Filterung unterschiedlicher Anteile des Sonnenlichts in den dichten Schichten der Erdatmosphäre bei unterschiedlichen Elevationen E (Höhenwinkeln) der Sonne. Bei einem Wertebereich der Elevation E von <0° befindet sich die Sonne unterhalb des Horizonts, was von der Elevationsbewertungsvorrichtung 41 aufgrund fehlenden Sonnenlichts mit einer Bewertungszahl von 0 als sehr negativ bewertet wird. Bei einem Wertebereich der Elevation E zwischen 0° und 10° befindet sich die Sonne leicht oberhalb des Horizonts. Diese Lichtsituation tritt unmittelbar nach dem Sonnenaufgang bzw. unmittelbar vor dem Sonnenuntergang auf und wird aufgrund der rötlichen (sehr warmen) Farbtemperatur des Sonnenlichts mit einer hohen Bewertungszahl als sehr positiv bewertet. Bei einem Wertebereich der Elevation E zwischen 10° und 40° scheint die Sonne in einem flachen bis mittelflächen Einfallswinkel auf das fotografische Objekt. Diese Lichtsituation tritt am Vormittag bzw. am Nachmittag auf und wird aufgrund der gelblichen (warmen) Farbtemperatur des Sonnenlichts mit einer mittleren Bewertungszahl als positiv bewertet. Bei einem Wertebereich der Elevation E zwischen 40° und 60° scheint die Sonne in einem steilen Einfallswinkel auf das fotografische Objekt. Diese Lichtsituation tritt am späten Vormittag bzw. am frühen Nachmittag auf und wird aufgrund der neutralen Farbtemperatur des Sonnenlichts mit einer niedrigen Bewertungszahl als neutral bewertet. Bei einem Wertebereich der Elevation E von >60° steht die Sonne in der Nähe des Zenits. Diese Lichtsituation tritt in den Mittagsstunden auf und wird aufgrund der bläulichen (kalten) Farbtemperatur des Sonnenlichts mit einer Bewertungszahl von 0 als negativ bewertet.

Die Elevationsbewertungsvorrichtung 41 bewertet die von der Elevationsbestimmungsvorrichtung 36 für den Zeitpunkt T berechnete Elevation E (Höhenwinkel) der Sonne weiterhin aufgrund der Tatsache, dass bei bei einem Wertebereich der Elevation E von <20° durch die tief stehende Sonne das fotografische Objekt im Schatten eines benachbarten fotografischen Objekts liegen kann. Diesem Umstand wird objektspezifisch in Abhängigkeit von der Lage des fotografischen Objekts zu benachbarten fotografischen Objekten durch eine speziell reduzierte Bewertungszahl Rechnung getragen. Informationen zur Lage des fotografischen Objekts relativ zu benachbarten fotografischen Objekten können mit Hilfe einer kabellosen oder kabelgebundenen Datenverbindung einer internen oder externen Datenbank entnommen werden.

Die berechneten Ergebnisse der Elevationsbewertungsvorrichtung 41, der Azimutobjektdifferenzwinkelbewertungsvorrichtung 42 und der Azimutkameradifferenzwinkelbewertungsvorrichtung 43 sind zur Optimierung der Eigenschaften einer fotografischen Aufnahme nur dann relevant, wenn zum Zeitpunkt T auch die entsprechenden Wetterbedingungen vorherrschen. So kann eine Bewertung von Azimut A (Horizontalwinkel) und Elevation E (Höhenwinkel) der Sonne bezogen auf die Objektposition OP, d.h. auf die Position des fotografischen Objekts, entfallen, wenn zum Zeitpunkt T bedeckter Himmel vorherrscht. Zu diesem Zweck ermittelt eine Wetterbestimmungsvorrichtung 34 zunächst die zum Zeitpunkt T vorherrschenden Wetterbedingungen. Dies kann beispielsweise in der Kamera 10 durch eine Messung der aktuellen Lichtverhältnisse erfolgen, indem durch eine bestimmte Lichtintensität und/oder durch eine bestimmte Farbtemperatur des Umgebungslichts zwischen wolkenlosem, bewölktem oder bedecktem Himmel unterschieden wird. Je nach Messgenauigkeit sind bei der Bestimmung der aktuell vorherrschenden Wetterbedingungen beliebig feine Abstufungen möglich. Alternativ erhält die Wetterbestimmungsvorrichtung 34 Informationen zum aktuellen Datum und zur aktuellen Uhrzeit von einer internen oder externen Uhr 55 sowie die von der Objektpositionsbestimmungsvorrichtung 30 bestimmte Objektposition OP. Davon ausgehend kann die Wetterbestimmungsvorrichtung 34 auch über eine kabellose oder kabelgebundene Datenverbindung entsprechende Wetterdaten bezogen auf die Objektposition OP aus einer beliebigen Wetterdatenbank 54 empfangen. Diese von der Wetterbestimmungsvorrichtung 34 ermittelten aktuell vorherrschenden Wetterbedingungen werden der Wetterbewertungsvorrichtung 40 zugeleitet und dienen der Berechnung einer Wetterbewertungszahl, deren Wertebereich zwischen einem Minimalwert (bedeckter Himmel) und einem Maximalwert (wolkenloser Himmel) liegt.

Schließlich berechnet die Gesamtbewertungsvorrichtung 44 aus den von der Wetterbewertungsvorrichtung 40, von der Elevationsbewertungsvorrichtung 41, von der Azimutobjektdifferenzwinkelbewertungsvorrichtung 42 sowie von der Azimutkameradifferenzwinkelbewertungsvorrichtung 43 berechneten Bewertungszahlen zum Zeitpunkt T eine Gesamtbewertungszahl. Dabei können die von der Elevationsbewertungsvorrichtung 41, von der Azimutobjektdifferenzwinkelbewertungsvorrichtung 42 sowie von der Azimutkameradifferenzwinkelbewertungsvorrichtung 43 berechneten Bewertungszahlen einzeln gewichtet sein. Auch kann die von der Wetterbewertungsvorrichtung 40 berechnete Wetterbewertungszahl unterschiedlich gewichtet mit den von der Elevationsbewertungsvorrichtung 41, von der Azimutobjektdifferenzwinkelbewertungsvorrichtung 42 sowie von der Azimutkameradifferenzwinkelbewertungsvorrichtung 43 berechneten Bewertungszahlen verknüpft werden.

Denkbar ist auch die Verknüpfung der Gesamtbewertungszahl mit einer Umgebungsbewertungszahl, die weitere äußere Umgebungseinflüsse, wie z.B. jahreszeitliche Einflüsse, Sichtbehinderungen durch hohes Verkehrsaufkommen oder Baustellen in der Umgebung des fotografischen Objekts, abbildet. Daten über Umgebungseinflüsse können von der Kamera 10 vor Ort oder über eine kabellose oder kabelgebundene Datenverbindung aus einer Datenbank ermittelt werden.

Sobald die Gesamtbewertungszahl zum Zeitpunkt T einen vorgegebenen Bewertungsschwellwert BSW überschreitet, d.h. sobald die optimalen Bedingungen für eine fotografische Aufnahme hinsichtlich Kontrast, Farbsättigung und Farbtemperatur vorherrschen, steuert die Gesamtbewertungsvorrichtung 44 eine Auslösevorrichtung 45 und/oder eine Signalisierungsvorrichtung 46 und/oder eine Anzeigevorrichtung 47 an. Der Bewertungsschwellwert BSW ist hierbei in der internen Speichereinheit abgelegt oder er kann über eine kabellose oder kabelgebundene Datenverbindung aus einer externen Speichereinheit oder aus einer externen Datenbank eingelesen werden. Weiterhin kann der Bewertungsschwellwert BSW über die Bedieneinheit manuell verändert werden.

Bei der Auslösevorrichtung 45 handelt es sich um eine Vorrichtung, die in der Lage ist, eine fotografische Aufnahme in der Kamera 10 automatisch auszulösen. Bei der Signalisierungsvorrichtung 46 handelt es sich um einen akustischen oder optischen Signalgeber, der den Fotografen mit Hilfe eines akustischen oder optischen Signals informiert, dass der optimale Zeitpunkt für eine fotografische Aufnahme in der Kamera 10 erreicht ist und/oder dass die optimalen Bedingungen für eine fotografische Aufnahme in der Kamera 10 hinsichtlich Kontrast, Farbsättigung und Farbtemperatur vorherrschen. Bei der Anzeigevorrichtung 47 handelt es sich um eine Vorrichtung, die den Fotografen visuell informiert, wann der optimale Zeitpunkt für eine fotografische Aufnahme in der Kamera 10 erreicht ist und/oder wann die optimalen Bedingungen für eine fotografische Aufnahme in der Kamera 10 hinsichtlich Kontrast, Farbsättigung und Farbtemperatur vorherrschen.

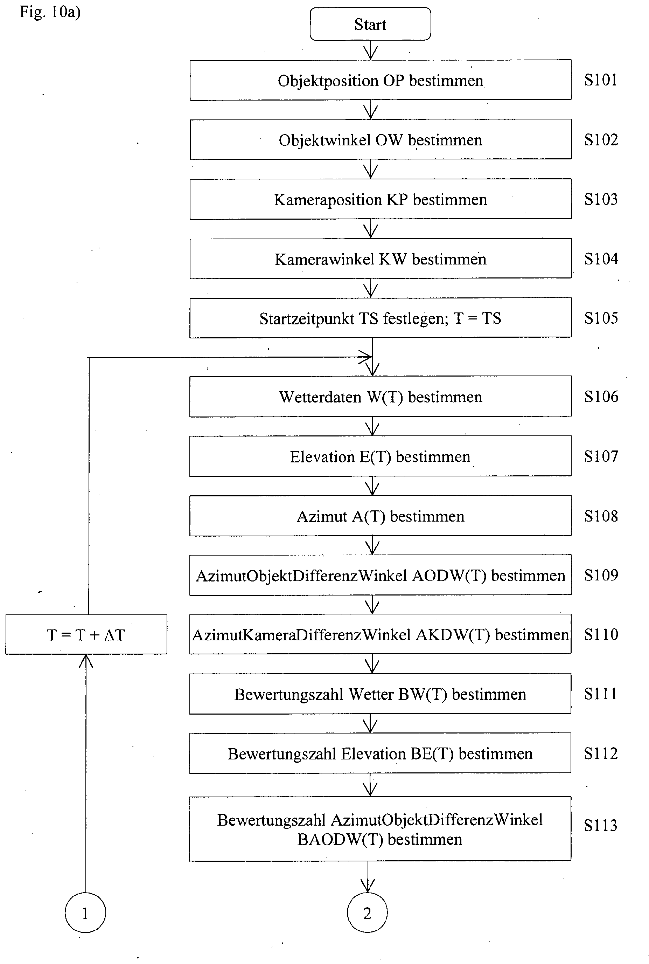

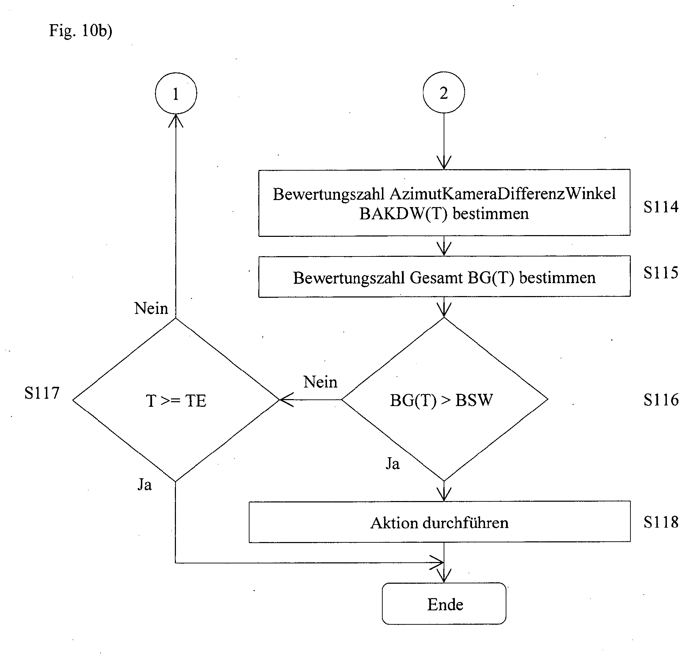

Fig. 10a und 10b zeigen das erfindungsgemäße Verfahren zum Optimieren von Eigenschaften einer fotografischen Aufnahme, welches automatisch und vorzugsweise in einer Kamera 10 durchgeführt wird. Zu Beginn des erfindungsgemäßen Verfahrens werden die Verfahrensschritte S101 bis S105 einmalig durchlaufen. Im Verfahrensschritt S101 bestimmt die Objektpositionsbestimmungsvorrichtung 30 die Objektposition OP, d.h. die geografische Position des fotografischen Objekts 1 oder 2, mit Hilfe von objektspezifischen GPS-Daten (Global Positioning System). Im nächsten Verfahrensschritt S102 bestimmt die Objektwinkelbestimmungsvorrichtung 31 anhand von GPS-Daten (Global Positioning System) zweier repräsentativer Koordinaten 4 und 5 des fotografischen Objekts 1, 2 den Objektwinkel OW, d.h. die Ausrichtung (Himmelsrichtung) des fotografischen Objekts 1, 2 in seiner Umgebung. Der Verfahrensschritt S103 beinhaltet die Ermittlung der Kameraposition KP der Kamera 10 durch die Kamerapositionsbestimmungsvorrichtung 32 mit Hilfe von GPS-Daten (Global Positioning System). Im Verfahrensschritt S104 berechnet die Kamerawinkelbestimmungsvorrichtung 33 den Kamerawinkel KW der Kamera 10 von der Kameraposition KP der Kamera 10 zur Objektposition OP, d.h. zur geografischen Position des fotografischen Objekts 1 oder 2. Schließlich erfolgt im Verfahrensschritt S105 die Festlegung eines Startzeitpunktes TS. Generell handelt es sich beim Startzeitpunkt TS um den aktuellen Zeitpunkt. Es kann aber auch ein beliebiger Startpunkt TS in der Vergangenheit oder in der Zukunft zur Durchführung des erfindungsgemäßen Verfahrens verwendet werden.

Die folgenden Verfahrensschritte S106 bis S116 werden zyklisch jeweils für einen bestimmten Zeitpunkt durchgeführt, wobei bei jedem Schleifendurchlauf zum Zeitpunkt T ein festgelegtes Zeitinkrement ΔT addiert wird. Im Verfahrensschritt S106 ermittelt die Wetterbestimmungsvorrichtung 34 Wetterdaten W(T) zum Zeitpunkt T. Weiterhin bestimmt im Verfahrensschritt S107 die Elevationsbestimmungsvorrichtung 36 die Elevation E(T) (Höhenwinkel) der Sonne zum Zeitpunkt T bezogen auf die im Verfahrensschritt S101 ermittelte Objektposition OP, d.h. bezogen auf die geografische Position des fotografischen Objekts 1, 2. Im Verfahrensschritt S108 bestimmt die Azimutbestimmungsvorrichtung 35 das Azimut A(T) (Horizontalwinkel) der Sonne zum Zeitpunkt T bezogen auf die im Verfahrensschritt S101 ermittelte Objektposition OP, d.h. bezogen auf die geografische Position des fotografischen Objekts 1, 2. Der Verfahrensschritt S109 beinhaltet die Berechnung eines Azimutobjektdifferenzwinkels AODW(T) als Differenz aus dem im Verfahrensschritt S108 ermittelten Azimut A(T) (Horizontalwinkel) der Sonne und dem im Verfahrensschritt S102 ermittelten Objektwinkel OW durch die Azimutobjektdifferenzwinkelbestimmungsvorrichtung 37. Schließlich erfolgt im Verfahrensschritt S110 die Berechnung des Azimutkameradifferenzwinkels AKDW(T) als Differenz aus dem im Verfahrensschritt S108 ermittelten Azimut A(T) (Horizontalwinkel) der Sonne und dem im Verfahrensschritt S104 ermittelten Kamerawinkel KW durch die Azimutkameradifferenzwinkelbestimmungsvorrichtung 38.

Die in den Verfahrensschritten S106 bis S110 ermittelten und auf den Zeitpunkt T bezogenen Daten werden in den Verfahrensschritten S111 bis S115 einer Bewertung und Gewichtung unterzogen. Hierzu erfolgt im Verfahrensschritt S111 durch die Wetterbewertungsvorrichtung 40 eine Bewertung der im Verfahrensschritt S106 ermittelten Wetterdaten W(T). Das Ergebnis dieser Bewertung ist die Wetterbewertungszahl BW(T). Weiterhin wird im Verfahrensschritt S112 durch die Elevationsbewertungsvorrichtung 41 die im Verfahrensschritt S107 ermittelte Elevation E(T) (Höhenwinkel) der Sonne bewertet. Das Ergebnis dieser Bewertung ist die Elevationsbewertungszahl BE(T). Der Verfahrensschritt S113 beinhaltet die Bewertung des im Verfahrensschritt S109 ermittelten Azimutobjektdifferenzwinkels AODW(T) zwischen dem Azimut A(T) (Horizontalwinkel) der Sonne und dem Objektwinkel OW durch die Azimutobjektdifferenzwinkelbewertungsvorrichtung 42. Das Ergebnis dieser Bewertung ist die Azimutobjektdifferenzwinkelbewertungszahl BAODW(T). Schließlich erfolgt durch die Azimutkameradifferenzwinkelbewertungsvorrichtung 43 im Verfahrensschritt S114 die Bewertung des im Verfahrensschritt S110 ermittelten Azimutkameradifferenzwinkels AKDW(T) zwischen dem Azimut A(T) (Horizontalwinkel) der Sonne und dem Kamerawinkel KW. Das Ergebnis dieser Bewertung ist die Azimutkameradifferenzwinkelbewertungszahl BAKDW(T).

Die in den Verfahrensschritten S111 bis S114 berechneten Bewertungszahlen BW(T), BE(T), BAODW(T) und BAKDW(T) werden im Verfahrensschritt S115 durch die Gesamtbewertungsvorrichtung 44 separat gewichtet und zu einer Gesamtbewertungszahl BG(T) verknüpft. Im Verfahrensschritt S116 erfolgt ein Vergleich der im Verfahrensschritt S115 berechneten Gesamtbewertungszahl BG(T) mit einem vorgegebenen Bewertungsschwellwert BSW. Die Gewichtungsfaktoren für die Bewertungszahlen BW(T), BE(T), BAODW(T) und BAKDW(T) sowie der Bewertungsschwellwert BSW sind in einer internen oder externen Datenbank gespeichert und können insbesondere über eine Benutzerschnittstelle geändert werden.

Falls die im Verfahrensschritt S115 berechnete Gesamtbewertungszahl BG(T) den vorgegebenen Bewertungsschwellwert BSW beim Vergleich im Verfahrensschritt S116 nicht überschreitet, erfolgt im Verfahrensschritt S117 ein Vergleich, ob der Zeitpunkt T den Endzeitpunkt TE erreicht hat. Mit Erreichen des Endzeitpunktes TE erfolgt der Abbruch des erfindungsgemäßen Verfahrens. Anderenfalls wird zum aktuellen Zeitpunk T ein vorgegebenes Zeitinkrement ΔT addiert und das Verfahren mit den Verfahrensschritten S106 bis S117 bezogen auf den neu berechneten Zeitpunkt T fortgesetzt.

Falls die im Verfahrensschritt S115 berechnete Gesamtbewertungszahl BG(T) zum Zeitpunkt T den vorgegebenen Bewertungsschwellwert BSW beim Vergleich im Verfahrensschritt S116 überschreitet, herrschen zum Zeitpunkt T somit die optimalen Bedingungen für eine fotografische Aufnahme mit der Kamera 10 hinsichtlich Kontrast, Farbsättigung und Farbtemperatur. Die Gesamtbewertungsvorrichtung 44 löst daher im Verfahrensschritt S118 eine Aktion aus, wobei vorzugsweise eine Auslösevorrichtung 45 zur Auslösung der Kamera 10 automatisch angesteuert wird. Alternativ steuert die Gesamtbewertungsvorrichtung 44 im Verfahrensschritt S118 eine Signalisierungsvorrichtung 46 und/oder eine Anzeigevorrichtung 47 an, um den Fotografen akustisch oder visuell zu informieren, dass die optimalen Bedingungen für eine fotografische Aufnahme mit der Kamera 10 hinsichtlich Kontrast, Farbsättigung und Farbtemperatur vorherrschen bzw. wann die optimalen Bedingungen für eine fotografische Aufnahme mit der Kamera 10 hinsichtlich Kontrast, Farbsättigung und Farbtemperatur zu erwarten sind.

Die erfindungsgemäße Vorrichtung bzw. das erfindungsgemäße Verfahren ist vorzugsweise in . eine Kamera 10 implementiert. Zum Betrieb der erfindungsgemäßen Vorrichtung bzw. zur Durchführung des erfindungsgemäßen Verfahrens benötigen die Objektpositionsbestimmungsvorrichtung 30 und die Objektwinkelbestimmungsvorrichtung 31 GPS-Daten (Global Positioning System) des abzubildenden fotografischen Objekts. Um diese Daten ermitteln zu können, muss das abzubildende fotografische Objekt zunächst identifiziert werden. Die Identifizierung des fotografischen Objekts erfolgt hierbei vorzugsweise automatisch durch bekannte Verfahren der digitalen Bildverarbeitung, indem eine initiale fotografische Aufnahme des Objekts mit einer vorhandenen Bilddatenbank verglichen wird. Bei dieser Bilddatenbank kann es sich um eine interne Datenbank oder um eine externe Datenbank handeln. Im Falle einer externen Bilddatenbank kann der Zugriff auf diese Datenbank durch eine kabellose oder kabelgebundene Datenverbindung der Kamera 10 mit der Datenbank realisiert. Denkbar ist aber auch die feste Vorgabe eines einzelnen fotografischen Objekts zum Betrieb der erfindungsgemäßen Vorrichtung bzw. zur Durchführung des erfindungsgemäßen Verfahrens.

Falls die erfindungsgemäße Vorrichtung bzw. das erfindungsgemäße Verfahren in eine Kamera 10 implementiert ist, läuft das erfindungsgemäße Verfahren in Echtzeit synchron zur aktuellen Uhrzeit ab, wobei die Kamera 10 zum optimalen Zeitpunkt einer fotografischen Aufnahme automatisch ausgelöst wird. Als Startzeitpunkt TS verwendet das erfindungsgemäße Verfahren die aktuelle Uhrzeit.

Die erfindungsgemäße Vorrichtung bzw. das erfindungsgemäße Verfahren kann jedoch auch in eine beliebige Steuerungsvorrichtung außerhalb einer Kamera 10 implementiert sein. Unter Vorgabe eines bestimmten fotografischen Objekts mit einer bestimmten Objektposition OP sowie einer bestimmten Kameraposition KP kann das erfindungsgemäße Verfahren in einer beliebigen erfindungsgemäßen Steuerungsvorrichtung an einem beliebigen Ort zu einem beliebigen Zeitpunkt durchgeführt werden. Als Startzeitpunkt TS kann daher ein beliebiger Zeitpunkt in der Vergangenheit oder in der Zukunft verwendet werden. Mit der Auswahl eines beliebigen Startzeitpunktes TS ist die Berechnung eines optimalen Zeitpunktes einer fotografischen Aufnahme in der Vergangenheit oder in der Zukunft möglich. Nach erfolgreicher Durchführung des erfindungsgemäßen Verfahrens erfolgt dann auf einer Anzeigevorrichtung die Anzeige des optimalen Zeitpunkts einer fotografischen Aufnahme für das vorgegebene fotografische Objekt an der vorgegebenen Kameraposition KP, d.h. als Information für den Fotografen, wo und wann der optimale Zeitpunkt zum Auslösen der Kamera zu erwarten ist.

Voraussetzung hierfür ist eine kabellose oder kabelgebundene Datenverbindung zu einer Datenbank, um der Objektpositionsbestimmungsvorrichtung 30, der Objektwinkelbestimmungsvorrichtung 31 und der Kamerapositionsbestimmungsvorrichtung 32 die zur Durchführung des Verfahrens notwendigen GPS-Daten (Global Positioning System) der Objektpositon OP, d.h. der geografischen Position des fotografischen Objekts, und der Kameraposition KP der Kamera 10 zur Verfügung zu stellen.

Generell kann das erfindungsgemäße Verfahren auch als Computerprogramm implementiert sein, wenn es auf einem Computer ausgeführt wird.

### Bezugszeichen

- 1: fotografisches Objekt (Gebäude)
- 2: fotografisches Objekt (Landschaft mit Höhenlinien)
- 4: erste repräsentative Koordinate des fotografischen Objekts 1, 2
- 5: zweite repräsentative Koordinate des fotografischen Objekts 1, 2
- 7: Vektor durch die repräsentativen Objektkoordinaten 4 und 5
- 8: Himmelsrichtung Nord als Vektor
- 10: Kamera
- 11: Vektor von der Kameraposition KP zum fotografischen Objekt 1, 2
- 13: Vorzugsseite des fotografischen Objekts
- 15: Vektor, der den horizontalen Sonnenstand repräsentiert
- 17: Vektor, der den vertikalen Sonnenstand repräsentiert
- 18: Horizontalebene

- 20: Vorrichtung zum Optimieren von Eigenschaften einer fotografischen Aufnahme
- 21: Recheneinheit
- 22: Speichereinheit

- 30: Objektpositionsbestimmungsvorrichtung
- 31: Objektwinkelbestimmungsvorrichtung
- 32: Kamerapositionsbestimmungsvorrichtung
- 33: Kamerawinkelbestimmungsvorrichtung
- 34: Wetterbestimmungsvorrichtung
- 35: Azimutbestimmungsvorrichtung
- 36: Elevationsbestimmungsvorrichtung
- 37: Azimutobjektdifferenzwinkelbestimmungsvorrichtung
- 38: Azimutkameradifferenzwinkelbestimmungsvorrichtung

- 40: Wetterbewertungsvorrichtung
- 41: Elevationsbewertungsvorrichtung
- 42: Azimutobjektdifferenzwinkelbewertungsvorrichtung
- 43: Azimutkameradifferenzwinkelbewertungsvorrichtung
- 44: Gesamtbewertungsvorrichtung
- 45: Auslösevorrichtung
- 46: Signalisierungsvorrichtung
- 47: Anzeigevorrichtung
- 48: Eingabevorrichtung

- 50: GPS-Empfänger
- 51: GPS-Datenbank
- 52: kabellose oder kabelgebundene Datenverbindung zum GPS-Empfänger
- 53: kabellose oder kabelgebundene Datenverbindung zu einer GPS-Datenbank
- 54: kabellose oder kabelgebundene Datenverbindung zu einer Wetterdatenbank
- 55: Uhr

- OP: Objektposition, d.h. geografische Position des fotografischen Objekts 1, 2
- OW: Objektwinkel, d.h. Ausrichtung des fotografischen Objekts 1, 2
- KP: Kameraposition
- KW: Kamerawinkel zum fotografischen Objekt, d.h. Blickrichtung der Kamera 10
- A: Azimut (Horizontalwinkel) der Sonne
- A(T): Azimut (Horizontalwinkel) der Sonne zum Zeitpunkt T
- E: Elevation (Höhenwinkel) der Sonne
- E(T): Elevation (Höhenwinkel) der Sonne zum Zeitpunkt T
- AODW: Azimutobjektdifferenzwinkel, d.h. Auftreffwinkel der Sonnenstrahlen auf die Oberfläche des fotografischen Objekts 1, 2
- AODW(T): Azimutobjektdifferenzwinkel zum Zeitpunkt T, d.h. Auftreffwinkel der Sonnenstrahlen auf die Oberfläche des fotografischen Objekts 1, 2
- AKDW: Azimutkameradifferenzwinkel, der den Sonnenstand relativ zum Kamerawinkel repräsentiert
- AKDW(T): Azimutkameradifferenzwinkel, der den Sonnenstand relativ zum Kamerawinkel zum Zeitpunkt T repräsentiert
- BW: Wetterbewertungszahl
- BW(T): Wetterbewertungszahl zum Zeitpunkt T
- BE: Elevationsbewertungszahl
- BE(T): Elevationsbewertungszahl zum Zeitpunkt T
- BAODW: Azimutobj ektdifferenzwinkelbewertungszahl
- BAODW(T): Azimutobjektdifferenzwinkelbewertungszahl zum Zeitpunkt T
- BAKDW: Azimutkameradifferenzwinkelbewertungszahl
- BAKDW(T): Azimutkameradifferenzwinkelbewertungszahl zum Zeitpunkt T
- BG: Gesamtbewertungszahl
- BG(T): Gesamtbewertungszahl zum Zeitpunkt T
- BSW: Bewertungsschwellwert
- BSW(T): Bewertungsschwellwert zum Zeitpunkt T
- T: aktueller Zeitpunkt
- ΔT: Zeitinkrement
- TS: Startzeitpunkt
- TE: Endzeitpunkt
- N: Himmelsrichtung Nord

## Patentansprüche

1. Vorrichtung zum Optimieren von Eigenschaften einer fotografischen Aufnahme, umfassend
- eine Objektwinkelbestimmungsvorrichtung (31), die dazu eingerichtet ist, basierend auf GPS-Daten den Objektwinkel (OW) des fotografischen Objekts (1, 2) zu bestimmen,
- eine Kamerawinkelbestimmungsvorrichtung (33), die dazu eingerichtet ist, basierend auf GPS-Daten den Kamerawinkel (KW) von der Kameraposition (KP) zur Objektposition (OP) zu bestimmen,
- eine Azimutbestimmungsvorrichtung (35), die dazu eingerichtet ist, das Azimut (A) der Sonne bezogen auf die Objektposition (OP) des fotografischen Objekts (1, 2) zu bestimmen,
- eine Elevationsbestimmungsvorrichtung (36), die dazu eingerichtet ist, die Elevation (E) der Sonne bezogen auf die Objektposition (OP) des fotografischen Objekts (1, 2) zu bestimmen,
- eine Azimutobjektdifferenzwinkelbestimmungsvorrichtung (37), die dazu eingerichtet ist, den Azimutobjektdifferenzwinkel (AODW) zu bestimmen, der sich aus der Differenz des Azimuts (A) der Sonne, welches von der Azimutbestimmungsvorrichtung ermittelt wurde, und des Objektwinkels (OW), der von der Objektdifferenzwinkelbestimmungsvorrichtung ermittelt wurde, ergibt,
- eine Azimutkameradifferenzwinkelbestimmungsvorrichtung (38), die dazu eingerichtet ist, den Azimutkameradifferenzwinkel (AKDW) zu bestimmen, der sich aus der Differenz des Azimuts (A) der Sonne, welches von der Azimutbestimmungsvorrichtung ermittelt wurde, und des Kamerawinkels (KW), der von der Kamerawinkelbestimmungsvorrichtung ermittelt wurde, ergibt,
- eine Elevationsbewertungsvorrichtung (41), die basierend auf der Elevation (E) der Sonne, die von der Elevationsbestimmungsvorrichtung bestimmt wurde, eine Elevationsbewertungszahl (BE) berechnet,
- eine Azimutobjektdifferenzwinkelbewertungsvorrichtung (42), die basierend auf dem Azimutobjektdifferenzwinkel (AODW), der von der Azimutobjektdifferenzwinkelbestimmungsvorrichtung bestimmt wurde, eine Azimutobjektdifferenzwinkelbewertungszahl (BAODW) berechnet,
- eine Azimutkameradifferenzwinkelbewertungsvorrichtung (43), die basierend auf dem Azimutkameradifferenzwinkel (AKDW), der von der Azimutkameradifferenzwinkelbestimmungsvorrichtung bestimmt wurde, eine Azimutkameradifferenzwinkelbewertungszahl (BAKDW) berechnet,
- eine Gesamtbewertungsvorrichtung (44), die basierend auf der Elevationsbewertungszahl (BE), der Azimutobjektdifferenzwinkelbewertungszahl (BAODW) und der Azimutkameradifferenzwinkelbewertungszahl (BAKDW) eine Gesamtbewertungszahl (BG) berechnet,
- wobei die Gesamtbewertungsvorrichtung (44) eine Aktion ausführt, wenn die Gesamtbewertungszahl (BG) einen Bewertungsschwellenwert (BSW) überschreitet.

2. Vorrichtung nach Anspruch 1, **dadurch gekennzeichnet, dass** die von der Gesamtbewertungsvorrichtung (44) ausgeführte Aktion die Ansteuerung einer Auslösevorrichtung (45) zum Auslösen einer fotografischen Aufnahme in einem tragbaren Gerät, insbesondere in der Kamera (10), ist.

3. Vorrichtung nach Anspruch 1, **dadurch gekennzeichnet, dass** die von der Gesamtbewertungsvorrichtung (44) ausgeführte Aktion die Ansteuerung einer Signalisierungsvorrichtung (46) ist, um den Benutzer zu informieren, dass die optimalen Bedingungen zum Auslösen einer fotografischen Aufnahme in dem tragbaren Gerät, insbesondere in der Kamera (10), zum Zeitpunkt T vorliegen, oder dass die von der Gesamtbewertungsvorrichtung (44) ausgeführte Aktion die Ansteuerung einer Anzeigevorrichtung (47) ist, um den Benutzer zu informieren, wann die optimalen Bedingungen zum Auslösen einer fotografischen Aufnahme in dem tragbaren Gerät, insbesondere in der Kamera (10), zu erwarten sind.

4. Vorrichtung nach einem der Ansprüche 2 oder 3, **dadurch gekennzeichnet, dass** die Vorrichtung (20) weiterhin eine Wetterbestimmungsvorrichtung (34) umfasst, um Wetterdaten bezogen auf die Objektposition OP zu berücksichtigen.

5. Vorrichtung nach Anspruch 4, **dadurch gekennzeichnet, dass** die Vorrichtung (20) weiterhin eine Wetterbewertungsvorrichtung (40) umfasst, die basierend auf Wetterdaten, die von der Wetterbestimmungsvorrichtung (34) bestimmt wurden, eine Wetterbewertungszahl (BW) berechnet und diese Wetterbewertungszahl (BW) in der Gesamtbewertungsvorrichtung (44) zur Berechnung einer Gesamtbewertungszahl (BG) berücksichtigt wird.

6. Verfahren zum Optimieren von Eigenschaften einer fotografischen Aufnahme, umfassend
- ein Objektwinkelbestimmungsvorgang (S102), der dazu eingerichtet ist, basierend auf GPS-Daten den Objektwinkel (OW) des fotografischen Objekts (1, 2) zu bestimmen,
- ein Kamerawinkelbestimmungsvorgang (S104), der dazu eingerichtet ist, basierend auf GPS-Daten den Kamerawinkel (KW) von der Kameraposition (KP) zur Objektposition (OP) zu bestimmen,
- ein Elevationsbestimmungsvorgang (S107), der dazu eingerichtet ist, die Elevation (E) der Sonne bezogen auf die Objektposition (OP) des fotografischen Objekts (1, 2) zum Zeitpunkt T zu bestimmen,
- ein Azimutbestimmungsvorgang (S108), der dazu eingerichtet ist, das Azimut (A) der Sonne bezogen auf die Objektposition (OP) des fotografischen Objekts (1, 2) zum Zeitpunkt T zu bestimmen,
- ein Azimutobjektdifferenzwinkelbestimmungsvorgang (S109), der dazu eingerichtet ist, den Azimutobjektdifferenzwinkel (AODW) zum Zeitpunkt T zu bestimmen, der sich aus der Differenz des Azimuts (A) der Sonne, welches im Azimutbestimmungsvorgang (S108) ermittelt wurde, und des Objektwinkels (OW), der im Objektwinkelbestimmungsvorgang (S102) ermittelt wurde, ergibt,
- ein Azimutkameradifferenzwinkelbestimmungsvorgang (S110), der dazu eingerichtet ist, den Azimutkameradifferenzwinkel (AKDW) zum Zeitpunkt T zu bestimmen, der sich aus der Differenz des Azimuts (A) der Sonne, welches im Azimutbestimmungsvorgang (S108) ermittelt wurde, und des Kamerawinkels (KW), der im Kamerawinkelbestimmungsvorgang (S104) ermittelt wurde, ergibt,
- ein Elevationsbewertungsvorgang (S112), der basierend auf der Elevation (E) der Sonne, die im Elevationsbestimmungsvorgang (S107) bestimmt wurde, eine Elevationsbewertungszahl (BE) zum Zeitpunkt T berechnet,
- ein Azimutobjektdifferenzwinkelbewertungsvorgang (S113), der basierend auf dem Azimutobjektdifferenzwinkel (AODW), der im Azimutobjektdifferenzwinkelbestimmungsvorgang (S109) bestimmt wurde, eine Azimutobjektdifferenzwinkelbewertungszahl (BAODW) zum Zeitpunkt T berechnet,
- ein Azimutkamcradifferenzwinkelbewertungsvorgang (S114), der basierend auf dem Azimutkameradifferenzwinkel (AKDW), der im Azimutkameradifferenzwinkelbestimmungsvorgang (S110) bestimmt wurde, eine Azimutkameradifferenzwinkelbewertungszahl (BAKDW) zum Zeitpunkt T berechnet,
- ein Gesamtbewertungsvorgang (S115), der basierend auf der Elevationsbewertungszahl (BE), der Azimutobjektdifferenzwinkelbewertungszahl (BAODW) und der Azimutkameradifferenzwinkelbewertungszahl (BAKDW) eine Gesamtbewertungszahl (BG) zum Zeitpunkt T berechnet,
- wobei eine Aktion ausgeführt wird, wenn in einem Vergleichsvorgang (S116) festgestellt wird, dass die Gesamtbewertungszahl (BG) einen Bewertungsschwellenwert (BSW) überschreitet,
- wobei die Verfahrensschritte (S107) bis (S117) bezogen auf einen um ein Zeitinkrement ΔT inkrementierten Zeitwert T wiederholt werden, wenn in einem Vergleichsvorgang (S116) festgestellt wird, dass die Gesamtbewertungszahl (BG) einen Bewertungsschwellenwert (BSW) nicht überschreitet,
- wobei das Verfahren beendet wird, wenn der Zeitpunkt T einen Endzeitpunkt TE erreicht hat.

7. Verfahren nach Anspruch 6, **dadurch gekennzeichnet, dass** die im Gesamtbewertungsvorgang (S115) ausgeführte Aktion das automatische Auslösen einer fotografischen Aufnahme in einem tragbaren Gerät, insbesondere in der Kamera (10), ist.

8. Verfahren nach Anspruch 6, **dadurch gekennzeichnet, dass** die im Gesamtbewertungsvorgang (S115) ausgeführte Aktion eine Signalisierung des Benutzers ist, um diesen zu informieren, dass die optimalen Bedingungen zum Auslösen einer fotografischen Aufnahme in dem tragbaren Gerät, insbesondere in der Kamera (10), zum Zeitpunkt T vorliegen, oder dass die im Gesamtbewertungsvorgang (S115) ausgeführte Aktion eine visuelle Anzeige für den Benutzer ist, um diesen zu informieren, wann die optimalen Bedingungen zum Auslösen einer fotografischen Aufnahme in dem tragbaren Gerät, insbesondere in der Kamera (10), zu erwarten sind.

9. Verfahren nach einem der Ansprüche 7 oder 8, **dadurch gekennzeichnet, dass** das Verfahren weiterhin einen Wetterbestimmungsvorgang (S106) umfasst, um Wetterdaten an der Objektposition OP zum Zeitpunkt T zu berücksichtigen.

10. Verfahren nach Anspruch 9, **dadurch gekennzeichnet, dass** das Verfahren weiterhin einen Wetterbewertungsvorgang (S111) umfasst, der basierend auf Wetterdaten, die im Wetterbestimmungsvorgang (S106) bestimmt wurden, eine Wetterbewertungszahl (BW) zum Zeitpunkt T berechnet und diese Wetterbewertungszahl (BW) im Gesamtbewertungsvorgang (S115) zur Berechnung einer Gesamtbewertungszahl (BG) berücksichtigt wird.

## Claims

1. A device for optimizing photographic recording properties, comprising
- an object angle determination device (31) which is designed, based on GPS data, to determine the object angle (OW) of the photographic object (1, 2),
- a camera angle determination device (33) which is designed, based on GPS data, to determine the camera angle (KW) from the camera position (KP) to the object position (OP),
- an azimuth determination device (35) which is designed to determine the azimuth (A) of the sun with reference to the object position (OP) of the photographic object (1,2),
- an elevation determination device (36) which is designed to determine the elevation (E) of the sun with reference to the object position (OP) of the photographic object (1,2),
- an azimuth object difference angle determination device (37) which is designed to determine the azimuth object difference angle (AODW), which results from the difference of the azimuth (A) of the sun, which has been established by the azimuth determination device, and of the object angle (OW) which has been established by the object difference angle determination device,
- an azimuth camera difference angle determination device (38) which is designed to determine the azimuth camera difference angle (AKDW), which results from the difference of the azimuth (A) of the sun, which has been established by the azimuth determination device, and of the camera angle (KW) which has been established by the camera angle determination device,
- an elevation evaluation device (41) which, based on the elevation (E) of the sun, which has been determined by the elevation determination device, calculates an elevation evaluation number (BE),
- an azimuth object difference angle evaluation device (42) which, based on the azimuth object difference angle (AODW) which has been determined by the azimuth object difference angle determination device, calculates an azimuth object difference angle evaluation number (BAODW),
- an azimuth camera difference angle evaluation device (43) which, based on the azimuth camera difference angle (AKDW) which has been determined by the azimuth camera difference angle determination device, calculates an azimuth camera difference angle evaluation number (BAKDW),
- a total evaluation device (44) which, based on the elevation evaluation number (BE), the azimuth object difference angle evaluation number (BAODW) and the azimuth camera difference angle evaluation number (BAKDW), calculates a total evaluation number (BG),
- wherein the total evaluation device (44) executes an action if the total evaluation number (BG) exceeds an evaluation threshold (BSW).

2. The device according to Claim 1, **characterized in that** the action executed by the total evaluation device (44) is the activation of a triggering device (45) in order to trigger photographic recording in a portable appliance, in particular in the camera (10).

3. The device according to Claim 1, **characterized in that** the action executed by the total evaluation device (44) is the activation of a signaling device (46) in order to inform the user that the optimal conditions for triggering photographic recording in the portable appliance, in particular in the camera (10), exist at time T, or that the action executed by the total evaluation device (44) is the activation of a display device (47) in order to inform the user when the optimal conditions for triggering photographic recording in the portable appliance, in particular in the camera (10), are to be expected.

4. The device according to any one of Claims 2 or 3, **characterized in that** the device (20) furthermore comprises a weather determination device (34) in order to consider weather data with reference to the object position OP.

5. The device according to Claim 4, **characterized in that** the device (20) furthermore comprises a weather evaluation device (40) which, based on weather data which have been determined by the weather determination device (34), calculates a weather evaluation number (BW) and said weather evaluation number (BW) is considered in the total evaluation device (44) in order to calculate a total evaluation number (BG).

6. A method for optimizing photographic recording properties, comprising
- an object angle determination operation (S102) which is designed, based on GPS data, to determine the object angle (OW) of the photographic object (1, 2),
- a camera angle determination operation (S104) which is designed, based on GPS data, to determine the camera angle (KW) from the camera position (KP) to the object position (OP),
- an elevation determination operation (S107) which is designed to determine the elevation (E) of the sun with reference to the object position (OP) of the photographic object (1, 2) at time T,
- an azimuth determination operation (S108) which is designed to determine the azimuth (A) of the sun with reference to the object position (OP) of the photographic object (1, 2) at time T,
- an azimuth object difference angle determination operation (S109) which is designed to determine the azimuth object difference angle (AODW) at time T, which results from the difference of the azimuth (A) of the sun, which has been established in the azimuth determination operation (S108), and of the object angle (OW) which has been established in the object angle determination operation (S102),
- an azimuth camera difference angle determination operation (S110) which is designed to determine the azimuth camera difference angle (AKDW) at time T, which results from the difference of the azimuth (A) of the sun, which has been established in the azimuth determination operation (S108), and of the camera angle (KW) which has been established in the camera angle determination operation (S104),
- an elevation evaluation operation (S112) which, based on the elevation (E) of the sun which has been determined in the elevation determination operation (S107), calculates an elevation evaluation number (BE) at time T,
- an azimuth object difference angle evaluation operation (S113) which, based on the azimuth object difference angle (AODW) which has been determined in the azimuth object difference angle determination operation (S109), calculates an azimuth object difference angle evaluation number (BAODW) at time T,
- an azimuth camera difference angle evaluation operation (S114) which, based on the azimuth camera difference angle (AKDW) which has been determined in the azimuth camera difference angle determination operation (S110), calculates an azimuth camera difference angle evaluation number (BAKDW) at time T,
- a total evaluation operation (S115) which, based on the elevation evaluation number (BE), the azimuth object difference angle evaluation number (BAODW) and the azimuth camera difference angle evaluation number (BAKDW), calculates a total evaluation number (BG) at time T,
- wherein an action is executed if it is ascertained in a comparison operation (S116) that the total evaluation number (BG) exceeds an evaluation threshold (BSW),
- wherein the method steps (S107) to (S117) are repeated, with reference to a time value T incremented by a time increment ΔT, if it is ascertained in a comparison operation (S116) that the total evaluation number (BG) does not exceed an evaluation threshold (BSW),
- wherein the method is terminated if the time T has reached an end time TE.

7. The method according to Claim 6, **characterized in that** the action executed in the total evaluation operation (S115) is the automatic triggering of photographic recording in a portable appliance, in particular in the camera (10).

8. The method according to Claim 6, **characterized in that** the action executed in the total evaluation operation (S115) is signaling to the user in order to inform the latter that the optimal conditions for triggering photographic recording in the portable appliance, in particular in the camera (10), exist at time T, or that the action executed in the total evaluation operation (S115) is a visual display for the user in order to inform the latter when the optimal conditions for triggering photographic recording in the portable appliance, in particular in the camera (10), are to be expected.

9. The method according to any one of Claims 7 or 8, **characterized in that** the method furthermore comprises a weather determination operation (S106) in order to consider weather data at the object position (OP) at time T.

10. The method according to Claim 9, **characterized in that** the method furthermore comprises a weather evaluation operation (S111) which, based on weather data which have been determined in the weather determination operation (S106), calculates a weather evaluation number (BW) at time T, and said weather evaluation number (BW) is considered in the total evaluation operation (S115) in order to calculate a total evaluation number (BG).

## Revendications

1. Dispositif d'optimisation des propriétés d'une prise de vue photographique, comprenant
- un dispositif de détermination de l'angle de l'objet (31), qui est ajusté de manière à évaluer l'angle (OW) de l'objet photographique (1, 2) sur la base des données de localisation GPS,
- un dispositif de détermination de l'angle de l'appareil photo (33), qui est ajusté de manière à évaluer l'angle (KW) de la position de l'appareil photo (KP) par rapport à la position de l'objet (OP) sur la base des données de localisation GPS,
- un dispositif de détermination de l'azimut (35), qui est ajusté de manière à évaluer l'azimut (A) du soleil par rapport à la position (OP) de l'objet photographique (1, 2),
- un dispositif de détermination de l'élévation (36), qui est ajusté de manière à évaluer l'élévation (E) du soleil par rapport à la position (OP) de l'objet photographique (1, 2),
- un dispositif de détermination de l'angle différentiel de l'objet par rapport à l'azimut (37), qui est ajusté de manière à évaluer l'angle différentiel de l'objet par rapport à l'azimut (AODW), qui résulte de la différence entre l'azimut (A) du soleil, qui a été établi par le dispositif de détermination de l'azimut, et l'angle de l'objet (OW), qui a été évalué par le dispositif de détermination de l'angle différentiel de l'objet,
- un dispositif de détermination de l'angle différentiel de l'appareil photo par rapport à l'azimut (38), qui est ajusté de manière à évaluer l'angle différentiel de l'appareil photo par rapport à l'azimut (AKDW), qui résulte de la différence entre l'azimut (A) du soleil, qui a été établi par le dispositif de détermination de l'azimut, et l'angle de l'appareil photo (KW), qui a été établi par le dispositif de détermination de l'angle de l'appareil photo,
- un dispositif d'évaluation de l'élévation (41), qui calcule un nombre d'évaluation de l'élévation (BE) sur la base de l'élévation (E) du soleil, qui a été établi par le dispositif de détermination de l'élévation (36),
- un dispositif d'évaluation de l'angle différentiel de l'objet par rapport à l'azimut (42), qui calcule un nombre d'évaluation de l'angle différentiel de l'objet par rapport à l'azimut (BAODW) sur la base de l'angle différentiel de l'objet par rapport à l'azimut (AODW), qui a été établi par le dispositif d'évaluation de l'angle différentiel de l'objet par rapport à l'azimut,
- un dispositif d'évaluation de l'angle différentiel de l'appareil photo par rapport à l'azimut (43), qui calcule un nombre d'évaluation de l'angle différentiel de l'appareil photo par rapport à l'azimut (BAKDW) sur la base de l'angle différentiel de l'appareil photo par rapport à l'azimut (AKDW), qui a été établi par le dispositif d'évaluation de l'angle différentiel de l'appareil photo par rapport à l'azimut,
- un dispositif d'évaluation générale (44), qui calcule un nombre d'évaluation générale (BG) sur la base du nombre d'évaluation de l'élévation (BE), sur le nombre d'évaluation de l'angle différentiel de l'objet par rapport à l'azimut (BAODW) et sur le nombre d'évaluation de l'angle différentiel de l'appareil photo par rapport à l'azimut (BAKDW),
dans lequel le dispositif d'évaluation générale (44) exécute une action lorsque le nombre d'évaluation générale (BG) dépasse une valeur seuil d'évaluation (BSW).

2. Dispositif selon la revendication 1, **caractérisé en ce que** l'action exécutée par le dispositif d'évaluation générale (44) est l'activation d'un dispositif de déclenchement (45) servant à déclencher une prise de vue photographique dans un appareil portable, notamment dans l'appareil photo (10).

3. Dispositif selon la revendication 1, **caractérisé en ce que** l'action exécutée par le dispositif d'évaluation générale (44) est l'activation d'un dispositif de signalisation (46) afin d'informer l'utilisateur que les conditions optimales sont présentes à l'instant T pour déclencher une prise de vue photographique dans l'appareil portable, notamment dans l'appareil photo (10) ou que l'action exécutée par le dispositif d'évaluation générale (44) est l'activation d'un dispositif d'affichage (47) afin d'informer l'utilisateur quand les conditions optimales sont à prévoir pour déclencher une prise de vue photographique dans l'appareil portable, notamment dans l'appareil photo (10).

4. Dispositif selon l'une des revendications 2 ou 3, **caractérisé en ce que** le dispositif (20) comprend encore un dispositif de détermination des conditions météorologiques (34) pour prendre en considération les données météorologiques par rapport à la position de l'objet OP.

5. Dispositif selon la revendication 4, **caractérisé en ce que** le dispositif (20) comprend encore un dispositif d'évaluation des conditions météorologiques (40), qui calcule un nombre d'évaluation des conditions météorologiques (BW) sur la base des données météorologiques, qui ont été établies par le dispositif de détermination des conditions météorologiques (34) et que ce nombre d'évaluation des conditions météorologiques (BW) est pris en compte dans le dispositif d'évaluation générale (44) pour calculer un nombre d'évaluation générale (BG).

6. Procédé d'optimisation des propriétés d'une prise de vue photographique, comprenant
- un processus de détermination de l'angle de l'objet (S102), qui est ajusté de manière à évaluer l'angle (OW) de l'objet photographique (1, 2) sur la base des données de localisation GPS,
- un processus de détermination de l'angle de l'appareil photo (S 104), qui est ajusté de manière à évaluer l'angle (KW) de la position de l'appareil photo (KP) par rapport à la position de l'objet (OP) sur la base des données de localisation GPS,
- un processus de détermination de l'élévation (S107), qui est ajusté de manière à évaluer l'élévation (E) du soleil par rapport à la position (OP) de l'objet photographique (1, 2) à l'instant T,
- un processus de détermination de l'azimut (S108), qui est ajusté de manière à évaluer l'azimut (A) du soleil par rapport à la position (OP) de l'objet photographique (1, 2) à l'instant T,
- un processus de détermination de l'angle différentiel de l'objet par rapport à l'azimut (S109), qui est ajusté de manière à évaluer l'angle différentiel de l'objet par rapport à l'azimut (AODW) à l'instant T, qui résulte de la différence entre l'azimut (A) du soleil, qui a été établi au cours du processus de détermination de l'azimut (S108), et l'angle de l'objet (OW) de l'objet, qui a été évalué au cours du processus de détermination de l'angle différentiel de l'objet (S102),
- un processus de détermination de l'angle différentiel de l'appareil photo par rapport à l'azimut (S110), qui est ajusté de manière à évaluer l'angle différentiel de l'appareil photo par rapport à l'azimut (AKDW) à l'instant T, qui résulte de la différence entre l'azimut (A) du soleil, qui a été établi au cours du processus de détermination de l'azimut (S108), et l'angle de l'appareil photo (KW), qui a été établi au cours du processus de détermination de l'angle de l'appareil photo (S104),
- un processus d'évaluation de l'élévation (S112), qui calcule un nombre d'évaluation de l'élévation (BE) à l'instant T sur la base de l'élévation (E) du soleil, qui a été établi au cours du processus de détermination de l'élévation (S107),
- un processus d'évaluation de l'angle différentiel de l'objet par rapport à l'azimut (S113), qui calcule un nombre d'évaluation de l'angle différentiel de l'objet par rapport à l'azimut (BAODW) à l'instant T sur la base de l'angle différentiel de l'objet par rapport à l'azimut (AODW), qui a été établi au cours du processus d'évaluation de l'angle différentiel de l'objet par rapport à l'azimut (S109),
- un processus d'évaluation de l'angle différentiel de l'appareil photo par rapport à l'azimut (S114), qui calcule un nombre d'évaluation de l'angle différentiel de l'appareil photo par rapport à l'azimut (BAKDW) à l'instant T sur la base de l'angle différentiel de l'appareil photo par rapport à l'azimut (AKDW), qui a été établi au cours du processus d'évaluation de l'angle différentiel de l'appareil photo par rapport à l'azimut (S110),
- un processus d'évaluation générale (S115), qui calcule un nombre d'évaluation générale (BG) à l'instant T sur la base du nombre d'évaluation de l'élévation (BE), du nombre d'évaluation de l'angle différentiel de l'objet par rapport à l'azimut (BAODW) et du nombre d'évaluation de l'angle différentiel de l'appareil photo par rapport à l'azimut (BAKDW),
- dans lequel une action est exécutée lorsqu'il est constaté au cours d'un processus de comparaison (S116) que le nombre d'évaluation générale (BG) dépasse une valeur seuil d'évaluation (BSW),
- dans lequel les étapes de procédé (S 107) à (S117) sont répétées par rapport à une valeur temporelle T augmentée d'un incrément temporel ΔT lorsqu'il est constaté au cours d'un processus de comparaison (S116) que le chiffre d'évaluation générale (BG) ne dépasse pas une valeur seuil d'évaluation (BSW),
- dans lequel le procédé s'achève lorsque l'instant T a atteint un instant final TE.

7. Procédé selon la revendication 6, **caractérisé en ce que** l'action exécutée au cours du processus d'évaluation générale (S115) est le déclenchement automatique d'une prise de vue photographique dans un appareil portable, notamment dans l'appareil photo (10).

8. Procédé selon la revendication 6, **caractérisé en ce que** l'action exécutée au cours du processus d'évaluation générale (S115) est une signalisation à l'utilisateur afin de l'informer que les conditions optimales sont présentes à l'instant T pour déclencher une prise de vue photographique dans l'appareil portable, notamment dans l'appareil photo (10) ou que l'action exécutée au cours du processus d'évaluation générale (S115) est un affichage visuel destiné à l'utilisateur afin de l'informer quand les conditions optimales sont à prévoir pour déclencher une prise de vue photographique dans l'appareil portable, notamment dans l'appareil photo (10).

9. Procédé selon l'une des revendications 7 ou 8, **caractérisé en ce que** le procédé comprend encore un processus de détermination des conditions météorologiques (S 106) pour prendre en considération les données météorologiques par rapport à la position de l'objet (OP) à l'instant T.

10. Procédé selon la revendication 9, **caractérisé en ce que** le procédé comprend encore un processus d'évaluation des conditions météorologiques (S111), qui calcule un nombre d'évaluation des conditions météorologiques (BW) à l'instant T sur la base des données météorologiques, qui ont été établies au cours du processus de détermination des conditions météorologiques (S106), et que ce nombre d'évaluation des conditions météorologiques (BW) est pris en compte au cours du processus d'évaluation générale (S115) pour calculer un nombre d'évaluation générale (BG).
